(19) Europäisches Patentamt
European Patent Office
Office européen des brevets

(11) EP 4 011 975 A1

(12) EUROPEAN PATENT APPLICATION
published in accordance with Art. 153(4) EPC

(43) Date of publication:
15.06.2022 Bulletin 2022/24

(51) International Patent Classification (IPC):
C08L 67/00 (2006.01)     B29B 9/06 (2006.01)
C08G 63/60 (2006.01)     C08J 3/12 (2006.01)
C08K 7/02 (2006.01)

(21) Application number: 20852401.7

(22) Date of filing: 04.08.2020

(52) Cooperative Patent Classification (CPC):
B29B 9/06; C08G 63/60; C08J 3/12; C08K 7/02;
C08L 67/00

(86) International application number:
PCT/JP2020/029795

(87) International publication number:
WO 2021/029275 (18.02.2021 Gazette 2021/07)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 09.08.2019 JP 2019148158

(71) Applicant: SUMITOMO CHEMICAL COMPANY
LIMITED
Tokyo 103-6020 (JP)

(72) Inventors:
• TAMURA, Tasuku
Tsukuba-shi, Ibaraki 300-3294 (JP)
• SUGIYAMA, Takayuki
Tsukuba-shi, Ibaraki 300-3294 (JP)

(74) Representative: Vossius & Partner
Patentanwälte Rechtsanwälte mbB
Siebertstraße 3
81675 München (DE)

(54) **LIQUID CRYSTAL POLYESTER RESIN PELLET, AND PRODUCTION METHOD THEREFOR, AND PRODUCTION METHOD FOR MOLDED ARTICLE**

(57) The present invention relates to liquid crystal polyester resin pellets containing a thermoplastic resin comprising a liquid crystal polyester, and a fibrous filler, in which the pellets contain the fibrous filler in the amount of equal to or greater than 1 part by mass and smaller than 120 parts by mass with respect to 100 parts by mass of the thermoplastic resin, and a length-weighted average fiber length of the fibrous filler is equal to or greater than 4 mm and smaller than 50 mm.

FIG. 1

**Description**

[Technical Field]

The present invention relates to liquid crystal polyester resin pellets and a production method therefor, and a production method for a molded article obtained by using the liquid crystal polyester resin pellets.

Priority is claimed on Japanese Patent Application No. 2019-148158, filed August 9, 2019, the content of which is incorporated herein by reference.

[Background Art]

Liquid crystal polyester is known to have high fluidity, heat resistance, and dimensional accuracy. The liquid crystal polyester is rarely used alone, and is used as a liquid crystal polyester resin composition containing a filler in order to satisfy required characteristics (for example, flexural characteristics and impact resistance) in various applications. It is known that a molded article produced from such a liquid crystal polyester resin composition is lightweight and has high strength.

In recent years, in a field of transportation equipment including automobiles and aircraft, weight reduction of parts has been promoted for the purpose of improving fuel efficiency. In order to reduce the weight of the parts, it has been considered to use a resin material instead of the current metal material for material of each part. For example, by using the liquid crystal polyester resin composition as a molding material for an outer panel member for an automobile, an automobile which is lighter than the current product can be obtained.

However, the molded article obtained from the above-described liquid crystal polyester resin composition has a problem that mechanical properties are lower than those of the molded article obtained from the metal material.

In the related art, in order to improve mechanical strength, heat resistance, particle resistance, and the like, a liquid crystal polyester resin composition containing a liquid crystal polyester and a fibrous filler and a molded article obtained by using the same have been proposed (for example, see Patent Document 1).

[Citation List]

[Patent Document]

[Patent Document 1]
Japanese Unexamined Patent Application, First Publication No. 2012-193270

[Summary of Invention]

[Technical Problem]

Further weight reduction is required in formation of a large molded article such as an outer panel member for automobiles. However, with the demand for weight reduction and thinning of the molded article, a predetermined strength is required for the molded article, and in particular, there is a problem that a portion having a weak strength is partially produced depending on a structure of the molded article.

For example, in a Charpy impact test of the liquid crystal polyester resin composition in the related art, in which the fibrous filler is simply mixed with the liquid crystal polyester, such a problem appears as a large difference in Charpy impact strength, that is, a large notch sensitivity, between an unnotched specimen (that is, a cutout) and a notched specimen. In a molded article using a material having a high notch sensitivity, there is a problem that a degree of freedom in design is restricted due to the need to provide roundness in a corner part and an angle part.

The present invention is made in consideration of these circumstances, and an object thereof is to provide liquid crystal polyester resin pellets capable of forming a molded article with low notch sensitivity in a Charpy impact test, a production method therefor, and a production method for a molded article obtained by using the liquid crystal polyester resin pellets.

[Solution to Problem]

The present invention has the following aspects.
    [1] Liquid crystal polyester resin pellets containing:

a thermoplastic resin comprising a liquid crystal polyester; and
a fibrous filler,
in which the pellets contain the fibrous filler in the amount of equal to or greater than 1 part by mass and smaller than 120 parts by mass with respect to 100 parts by mass of the thermoplastic resin, and
the length-weighted average fiber length of the fibrous filler is equal to or greater than 4 mm and smaller than 50 mm.

[2] The liquid crystal polyester resin pellets according to [1],

the fibrous fillers are arranged in one direction, and
a fiber length of the fibrous filler is substantially the same as the length of the liquid crystal polyester resin pellets.

[3] The liquid crystal polyester resin pellets according to [1] or [2],
the proportion of the liquid crystal polyester is equal to or greater than 80 mass% and equal to or smaller than 100 mass% with respect to 100 mass% of the thermoplastic resin.
[4] The liquid crystal polyester resin pellets according to any one of [1] to [3],

the liquid crystal polyester comprises a repeating unit represented by Formula (1), (2), or (3),
the amount of the repeating unit represented by Formula (1) is equal to or greater than 30 mol% and equal to or smaller than 100 mol% with respect to a total amount of the repeating units represented by Formulae (1), (2), and (3),
the amount of the repeating unit represented by Formula (2) is equal to or greater than 0 mol% and equal to or smaller than 35 mol% with respect to the total amount of the repeating units represented by Formulae (1), (2), and (3), and
the amount of the repeating unit represented by Formula (3) is equal to or greater than 0 mol% and equal to or smaller than 35 mol% with respect to the total amount of the repeating units represented by Formulae (1), (2), and (3),

$$(1) \qquad -O-Ar^1-CO-$$

$$(2) \qquad -CO-Ar^2-CO-$$

$$(3) \qquad -X-Ar^3-Y-$$

(in Formulae (1) to (3), $Ar^1$ represents a phenylene group, a naphthylene group, or a biphenylylene group, $Ar^2$ and $Ar^3$ each independently represent a phenylene group, a naphthylene group, a biphenylene group, or a group represented by Formula (4), X and Y each independently represent an oxygen atom or an imino group, and hydrogen atoms in the group represented by $Ar^1$, $Ar^2$, or $Ar^3$ may be each independently substituted with a halogen atom, an alkyl group, or an aryl group)

$$(4) \qquad -Ar^4-Z-Ar^5-$$

(in Formula (4), $Ar^4$ and $Ar^5$ each independently represent a phenylene group or a naphthylene group, and Z represents an oxygen atom, a sulfur atom, a carbonyl group, a sulfonyl group, or an alkylidene group).

[5] The liquid crystal polyester resin pellets according to any one of [1] to [4],
in which the fibrous filler is at least one selected from the group consisting of a carbon fiber and a glass fiber.
[6] The liquid crystal polyester resin pellets according to any one of [1] to [5],
a notched Charpy impact strength Ea of a specimen having a 45° V-shaped groove with a depth of 2 mm in a center of a length of 80 mm, a width of 10 mm, and a thickness of 4 mm, which is produced using the liquid crystal polyester resin pellets, and an unnotched Charpy impact strength Eb of a specimen with a length of 80 mm, a width of 10 mm, and a thickness of 4 mm, which is produced using the liquid crystal polyester resin pellets satisfy Expression (5),

$$1 - (Ea / Eb) \leq 0.4 \quad \cdots (5).$$

[7] A production method for the liquid crystal polyester resin pellets according to any one of [1] to [6], comprising:

a step of impregnating a fiber bundle, which is a raw material of the fibrous filler, with the thermoplastic resin in a molten state to obtain a strand-shaped resin structure, and

a step of cutting the strand-shaped resin structure.

[8] A production method for a molded article comprising:
a step of molding a molded article using the liquid crystal polyester resin pellets according to any one of [1] to [6].

[Advantageous Effects of Invention]

According to the present invention, it is possible to provide liquid crystal polyester resin pellets capable of forming a molded article with low notch sensitivity in a Charpy impact test, a production method therefor, and a production method for a molded article obtained by using the liquid crystal polyester resin pellets.

[Brief Description of Drawings]

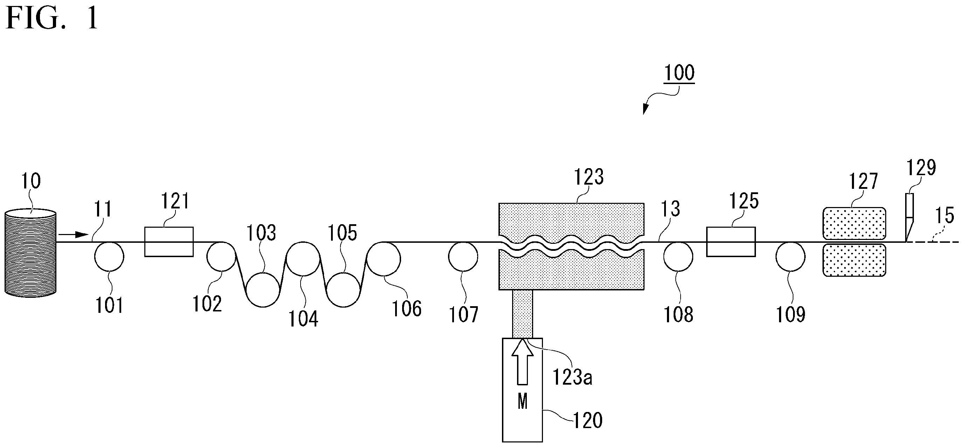

Fig. 1 is a schematic view showing an example of a production equipment of liquid crystal polyester resin pellets of the present embodiment.

[Description of Embodiments]

(Liquid Crystal Polyester Resin Pellets)

Liquid crystal polyester resin pellets of the present embodiment contain a thermoplastic resin comprising a liquid crystal polyester and a fibrous filler.

In the present specification, a composition containing a thermoplastic resin comprising a liquid crystal polyester and a fibrous filler is referred to as a "liquid crystal polyester resin composition". A molding material for producing a molded article, which is obtained by granulating the liquid crystal polyester resin composition, is referred to as a "liquid crystal polyester resin pellets". A molded article obtained from the liquid crystal polyester resin composition is referred to as a "liquid crystal polyester resin molded article".

Examples of a shape of the liquid crystal polyester resin pellets include a cylindrical shape, a disk shape, an elliptical cylindrical shape, an elliptical disk shape, a go stone shape, a spherical shape, and an indefinite shape, but the shape of the liquid crystal polyester resin pellets is not limited thereto. From the viewpoint of productivity and handling during molding, a cylindrical shape is preferable.

In the liquid crystal polyester resin pellets of the present embodiment, since the pellets contain the fibrous filler in the amount of equal to or greater than 1 part by mass and smaller than 120 parts by mass with respect to 100 parts by mass of the thermoplastic resin, and a length-weighted average fiber length of the fibrous filler is equal to or greater than 4 mm and smaller than 50 mm, Charpy impact strength of the molded article molded from the above-described liquid crystal polyester resin pellets can be increased, and notch sensitivity can be reduced in a Charpy impact test.

The length-weighted average fiber length of the fibrous filler in the liquid crystal polyester resin pellets or the molded article can be obtained by the following procedure. First, a test sample of the liquid crystal polyester resin pellets or the molded article is sintered to remove a resin component, leaving only the fibrous filler. Next, the fibrous filler is dispersed in an aqueous solution containing a surfactant to prepare a fibrous filler dispersion liquid. By observing the fibrous filler dispersion liquid with a microscope and measuring the length of more than 500 fibers, the length-weighted average fiber length $1m = (\Sigma li^2 \times ni) / (\Sigma li \times ni)$ of the fibrous filler in the liquid crystal polyester resin pellets or the molded article is obtained.

li: fiber length of fibrous filler
ni: number of fibrous fillers with fiber length li

Since the liquid crystal polyester resin pellets of the present embodiment have the above-described configuration, it is possible to leave a length-weighted average fiber length of the fibrous filler in a notched Charpy specimen , and since the Charpy specimen has the above-described composition, it has an effect of suppressing progress of cracks due to the impact concentrated around the notch and increasing the impact strength, and as a result, it has the same impact strength as an unnotched Charpy specimen. It is considered that this makes it possible to reduce the notch sensitivity.

Specifically, as a notched Charpy impact strength Ea of a specimen having a 45° V-shaped groove with a depth of 2 mm in the center of a length of 80 mm, a width of 10 mm, and a thickness of 4 mm, which is produced using the above-described liquid crystal polyester resin pellets, equal to or greater than 7 kJ/m$^2$ is preferable, equal to or greater

than 9 kJ/m$^2$ is more preferable, equal to or greater than 10 kJ/m$^2$ is even more preferable, and equal to or greater than 15 kJ/m$^2$ is particularly preferable. In addition, as an unnotched Charpy impact strength Eb of a specimen with a length of 80 mm, a width of 10 mm, and a thickness of 4 mm, which is produced using the above-described liquid crystal polyester resin pellets, equal to or greater than 9 kJ/m$^2$ is preferable, equal to or greater than 11 kJ/m$^2$ is more preferable, equal to or greater than 14 kJ/m$^2$ is even more preferable, and equal to or greater than 15 kJ/m$^2$ is particularly preferable. The above-described Charpy impact strength Ea may be equal to or greater than 7 kJ/m$^2$ and equal to or smaller than 100 kJ/m$^2$, equal to or greater than 9 kJ/m$^2$ and equal to or smaller than 90 kJ/m$^2$, equal to or greater than 10 kJ/m$^2$ and equal to or smaller than 85 kJ/m$^2$, or equal to or greater than 10 kJ/m$^2$ and equal to or smaller than 70 kJ/m$^2$. The above-described Charpy impact strength Eb may be equal to or greater than 9 kJ/m$^2$ and equal to or smaller than 100 kJ/m$^2$, equal to or greater than 11 kJ/m$^2$ and equal to or smaller than 90 kJ/m$^2$, equal to or greater than 14 kJ/m$^2$ and equal to or smaller than 85 kJ/m$^2$, or equal to or greater than 14 kJ/m$^2$ and equal to or smaller than 70 kJ/m$^2$.

In addition, the Charpy impact strength Ea of a notched specimen having a 45° V-shaped groove with a depth of 2 mm in a center of a length of 80 mm, a width of 10 mm, and a thickness of 4 mm, which is produced using the above-described liquid crystal polyester resin pellets, and the unnotched Charpy impact strength Eb of a specimen with a length of 80 mm, a width of 10 mm, and a thickness of 4 mm, which is produced using the above-described liquid crystal polyester resin pellets, can satisfy Expression (5).

$$1 - (Ea \,/\, Eb) \leq 0.4 \quad \cdots (5)$$

The notch sensitivity represented by Expression "1 - (Ea / Eb)" can be more preferably equal to or smaller than 0.35 and particularly preferably equal to or smaller than 0.30. The notch sensitivity represented by Expression "1 - (Ea / Eb)" may be equal to or greater than -0.50 and equal to or smaller than 0.40, equal to or greater than -0.45 and equal to or smaller than 0.35, or equal to or greater than -0.40 and equal to or smaller than 0.30.

However, the above-described specimen with a length of 80 mm, a width of 10 mm, and a thickness of 4 mm is produced by an injection molding molded article using liquid crystal polyester resin pellets at an injection speed of 20 mm/s, a screw rotation speed of 100 rpm, a holding pressure of 100 MPa, and a back pressure of 0 MPa, and the above-described specimen having a 45° V-shaped groove with a depth of 2 mm in the center of a length of 80 mm, a width of 10 mm, and a thickness of 4 mm is produced by applying a notch processing with a notch angle of 45° and a depth of 2 mm to the center of the specimen having a length of 80 mm, a width of 10 mm, and a thickness of 4 mm.

In an impact test of a notched plastic specimen, compared to an impact test of an unnotched plastic specimen, stress concentration is usually generated around the notch and the impact strength is usually significantly reduced. However, in the impact test of the unnotched specimen of the liquid crystal polyester resin molded article of the present embodiment, in addition to the large impact strength, the impact strength is maintained even in the impact test of the notched specimen. This is because the impact of the liquid crystal polyester concentrated around the notch is guided in an orientation direction of the liquid crystal polyester, so that it is considered that impact energy can be mitigated by friction generated at an interface between the fibrous filler existing so that a length direction is along the orientation direction of the liquid crystal polyester and the liquid crystal polyester resin. As a result, it is considered that, in the specimen of the liquid crystal polyester resin molded article of the present embodiment, the notch sensitivity represented by Expression "1 - (Ea / Eb)" can be reduced.

The liquid crystal polyester resin pellets of the present embodiment are suitably used as a molding material for a molded article described later.

<Thermoplastic Resin comprising Liquid Crystal Polyester>

In the liquid crystal polyester resin pellets of the present embodiment, the proportion of the liquid crystal polyester with respect to 100 mass% of the thermoplastic resin is preferably equal to or greater than 80 mass% and equal to or smaller than 100 mass%, more preferably equal to or greater than 85 mass% and equal to or smaller than 100 mass%, and particularly preferably equal to or greater than 90 mass% and equal to or smaller than 100 mass%. When the proportion of the liquid crystal polyester is equal to or greater than the above-described lower limit value, it has an effect of reducing the notch sensitivity in the Charpy impact test of the specimen produced by using the liquid crystal polyester resin pellets of the present embodiment.

The liquid crystal polyester used in the liquid crystal polyester resin pellets of the present embodiment is a liquid crystal polyester which exhibits liquid crystalline properties in a molten state, and the thermoplastic resin containing the liquid crystal polyester also preferably exhibits liquid crystalline properties in a molten state, and preferably melts at a temperature of equal to or lower than 450°C.

The liquid crystal polyester used in the present embodiment may be a liquid crystal polyester amide, a liquid crystal polyester ether, a liquid crystal polyester carbonate, or a liquid crystal polyester imide. The liquid crystal polyester used in the present embodiment is preferably a wholly aromatic liquid crystal polyester having only an aromatic compound as a raw material monomer.

Typical examples of the liquid crystal polyester used in the present embodiment include a material obtained by polymerization (polycondensation) of aromatic hydroxycarboxylic acid, aromatic dicarboxylic acid, and at least one compound selected from the group consisting of aromatic diol, aromatic hydroxyamine, and aromatic diamine, a material obtained by polymerization of plural kinds of aromatic hydroxycarboxylic acid, a material obtained by polymerization of aromatic dicarboxylic acid and at least one compound selected from the group consisting of aromatic diol, aromatic hydroxyamine, and aromatic diamine, and a material obtained by polymerization of polyester such as polyethylene terephthalate and aromatic hydroxycarboxylic acid. Here, as the aromatic hydroxycarboxylic acid, the aromatic dicarboxylic acid, the aromatic diol, the aromatic hydroxyamine, and the aromatic diamine, a polymerizable derivative thereof may be each independently used in place of a part or all thereof.

Examples of a polymerizable derivative of a compound having a carboxyl group, such as the aromatic hydroxycarboxylic acid and the aromatic dicarboxylic acid, include a compound (ester) obtained by converting the carboxyl group into an alkoxycarbonyl group or an aryloxycarbonyl group, a compound (acid halide) obtained by converting the carboxyl group into a haloformyl group, and a compound (acid anhydride) obtained by converting the carboxyl group into an acyloxycarbonyl group. Examples of a polymerizable derivative of a compound having a hydroxyl group, such as the aromatic hydroxycarboxylic acid, the aromatic diol, and the aromatic hydroxyamine, include a compound (acylated product) obtained by acylating the hydroxyl group and converting it into an acyloxyl group. Examples of a polymerizable derivative of a compound having an amino group, such as the aromatic hydroxyamine and the aromatic diamine, include a compound (acylated product) obtained by acylating the amino group and converting it into an acylamino group.

The liquid crystal polyester used in the present embodiment preferably comprises a repeating unit represented by Formula (1) (hereinafter, may be referred to as a "repeating unit (1)"), and more preferably comprises the repeating unit (1), a repeating unit represented by Formula (2) (hereinafter, may be referred to as a "repeating unit (2)"), and a repeating unit represented by Formula (3) (hereinafter, may be referred to as a "repeating unit (3)").

$$(1) \qquad \text{-O-Ar}^1\text{-CO-}$$

$$(2) \qquad \text{-CO-Ar}^2\text{-CO-}$$

$$(3) \qquad \text{-X-Ar}^3\text{-Y-}$$

(Ar$^1$ represents a phenylene group, a naphthylene group, or a biphenylylene group, Ar$^2$ and Ar$^3$ each independently represent a phenylene group, a naphthylene group, a biphenylylene group, or a group represented by Formula (4), X and Y each independently represent an oxygen atom or an imino group (-NH-), and hydrogen atoms in the group represented by Ar$^1$, Ar$^2$, or Ar$^3$ may be each independently substituted with a halogen atom, an alkyl group, or an aryl group.)

$$(4) \qquad \text{-Ar}^4\text{-Z-Ar}^5\text{-}$$

(Ar$^4$ and Ar$^5$ each independently represent a phenylene group or a naphthylene group, and Z represents an oxygen atom, a sulfur atom, a carbonyl group, a sulfonyl group, or an alkylidene group.)

Examples of the above-described halogen atom include a fluorine atom, a chlorine atom, a bromine atom, and an iodine atom. Examples of the above-described alkyl group include a methyl group, an ethyl group, an n-propyl group, an isopropyl group, an n-butyl group, an isobutyl group, an s-butyl group, a t-butyl group, an n-hexyl group, a 2-ethylhexyl group, an n-octyl group, and an n-decyl group, and the number of carbon atoms thereof is preferably 1 to 10. Examples of the above-described aryl group include a phenyl group, an o-tolyl group, an m-tolyl group, a p-tolyl group, an 1 -naphthyl group, and a 2-naphthyl group, and the number of carbon atoms thereof is preferably 6 to 20. When the above-described hydrogen atom is substituted with these groups, the number thereof is preferably 2 or less and more preferably 1 or less for each of the groups represented by Ar$^1$, Ar$^2$, or Ar$^3$, each independently.

Examples of the above-described alkylidene group include a methylene group, an ethylidene group, an isopropylidene group, an n-butylidene group, and a 2-ethylhexylidene group, and the number of carbon atoms thereof is preferably 1 to 10.

The repeating unit (1) is a repeating unit derived from a predetermined aromatic hydroxycarboxylic acid. As the repeating unit (1), a repeating unit in which Ar$^1$ is a p-phenylene group (repeating unit derived from p-hydroxybenzoic acid), or a repeating unit in which Ar$^1$ is a 2,6-naphthylene group (repeating unit derived from 6-hydroxy-2-naphthoic acid) is preferable.

In the present specification, the "derived" means that, in order to polymerize the raw material monomer, a chemical structure of a functional group which contributes to the polymerization changes, and no other structural change occurs.

The repeating unit (2) is a repeating unit derived from predetermined aromatic dicarboxylic acid. As the repeating unit (2), a repeating unit in which $Ar^2$ is a p-phenylene group (repeating unit derived from terephthalic acid), a repeating unit in which $Ar^2$ is a m-phenylene group (repeating unit derived from isophthalic acid), a repeating unit in which $Ar^2$ is a 2,6-naphthylene group (repeating unit derived from 2,6-naphthalenedicarboxylic acid), or a repeating unit in which $Ar^2$ is a diphenyl ether-4,4'-diyl group (repeating unit derived from diphenyl ether-4,4'-dicarboxylic acid) is preferable.

The repeating unit (3) is a repeating unit derived from a predetermined aromatic diol, aromatic hydroxylamine, or aromatic diamine. As the repeating unit (3), a repeating unit in which $Ar^3$ is a p-phenylene group (repeating unit derived from hydroquinone, p-aminophenol, or p-phenylenediamine), or a repeating unit in which $Ar^3$ is a 4,4'-biphenylylene group (repeating unit derived from 4,4'-dihydroxybiphenyl, 4-amino-4'-hydroxybiphenyl, or 4,4'-diaminobiphenyl) is preferable.

The amount of the repeating unit (1) is preferably equal to or greater than 30 mol% and equal to or smaller than 100 mol%, more preferably equal to or greater than 30 mol% and equal to or smaller than 90 mol%, even more preferably equal to or greater than 40 mol% and equal to or smaller than 80 mol%, and particularly preferably equal to or greater than 50 mol% and equal to or smaller than 70 mol% with respect to a total amount of all repeating units (value obtained by adding up a substance amount equivalent (mol) of each repeating unit, which is obtained by dividing mass of each repeating unit constituting the liquid crystal polyester resin by formula weight of each repeating unit).

The amount of the repeating unit (2) is preferably equal to or greater than 0 mol% and equal to or smaller than 35 mol%, more preferably equal to or greater than 10 mol% and equal to or smaller than 35 mol%, even more preferably equal to or greater than 15 mol% and equal to or smaller than 30 mol%, and particularly preferably equal to or greater than 17.5 mol% and equal to or smaller than 27.5 mol% with respect to the total amount of all repeating units.

The amount of the repeating unit (3) is preferably equal to or greater than 0 mol% and equal to or smaller than 35 mol%, more preferably equal to or greater than 10 mol% and equal to or smaller than 35 mol%, even more preferably equal to or greater than 15 mol% and equal to or smaller than 30 mol%, and particularly preferably equal to or greater than 17.5 mol% and equal to or smaller than 27.5 mol% with respect to the total amount of all repeating units. However, the total amount of the repeating units (1), (2), and (3) does not exceed 100 mol%.

The amount of the repeating unit (1) is higher, it is easier to improve melt fluidity, heat resistance, or strength and rigidity. However, when the content is too high, melting temperature or melting viscosity tends to increase, and the temperature required for molding tends to be high.

A proportion of the amount of the repeating unit (2) to the amount of the repeating unit (3) is shown as [amount of repeating unit (2)]/[amount of repeating unit (3)] (mol/mol), and is preferably 0.9/1 to 1/0.9, more preferably 0.95/1 to 1/0.95, and even more preferably 0.98/1 to 1/0.98.

The liquid crystal polyester used in the present embodiment may have two or more repeating units (1) to (3) each independently. In addition, the liquid crystal polyester may have a repeating unit other than the repeating units (1) to (3), and the content thereof is preferably equal to or smaller than 10 mol% and more preferably equal to or smaller than 5 mol% with respect to the total amount of all repeating units.

Since the melting viscosity tends to be low, the liquid crystal polyester used in the present embodiment preferably has, as the repeating unit (3), a repeating unit in which X and Y are each an oxygen atom, that is, a repeating unit derived from a predetermined aromatic diol, and more preferably has, as the repeating unit (3), only a repeating unit in which X and Y are each an oxygen atom.

The liquid crystal polyester used in the present embodiment is preferably produced by causing melt polymerization of a raw material monomer corresponding to the repeating unit constituting the liquid crystal polyester, and causing solid phase polymerization of the obtained polymer (hereinafter, may be referred to as a "prepolymer"). As a result, it is possible to produce high-molecular-weight liquid crystal polyester having high heat resistance, strength, and rigidity with excellent operability. The melt polymerization may be performed in the presence of a catalyst, and examples of the catalyst include metal compounds such as magnesium acetate, stannous acetate, tetrabutyl titanate, lead acetate, sodium acetate, potassium acetate, and antimony trioxide, and nitrogen-containing heterocyclic compounds such as 4-(dimethylamino) pyridine and 1-methylimidazole. Among these, a nitrogen-containing heterocyclic compound is preferably used.

The flow starting temperature of the liquid crystal polyester used in the present embodiment is preferably equal to or higher than 280°C, more preferably equal to or higher than 280°C and equal to or lower than 400°C, and even more preferably equal to or higher than 280°C and equal to or lower than 380°C.

As the flow starting temperature of the liquid crystal polyester used in the present embodiment is higher, the heat resistance, strength, and rigidity of the liquid crystal polyester tend to be improved. On the other hand, when the flow starting temperature of the liquid crystal polyester is higher than 400°C, the melting temperature and melting viscosity of the liquid crystal polyester tend to be high. Therefore, the temperature required for molding the liquid crystal polyester tends to be high.

In the present specification, the flow starting temperature of the liquid crystal polyester is also referred to as a flow temperature, and is a temperature which is a measure of a molecular weight of the liquid crystal polyester (see "Liquid Crystal Polymer, -Synthesis·Molding·Application-", edited by Naoyuki Koide, CMC Co., Ltd., June 5, 1987, p.95). The flow starting temperature is a temperature at which a viscosity of 4800 Pa·s (48000 poise) is exhibited when the liquid crystal polyester is melted and extruded from a nozzle having an inner diameter of 1 mm and a length of 10 mm by using a capillary rheometer while raising the temperature at a rate of 4°C/min under a load of 9.8 MPa (100 kg/cm$^2$).

Examples of a resin other than the liquid crystal polyester included in the liquid crystal polyester resin pellets include polyolefin resins such as polyethylene, polypropylene, polybutadiene, and polymethylpentene; vinyl-based resins such as vinyl chloride, vinylidene chloride vinyl acetate, and polyvinyl alcohol; polystyrene-based resins such as polystyrene, acrylonitrile-styrene resin (AS resin), and acrylonitrile-butadiene-styrene resin (ABS resin); polyamide-based resins such as polyamide 6 (nylon 6), polyamide 66 (nylon 66), polyamide 11 (nylon 11), polyamide 12 (nylon 12), polyamide 46 (nylon 46), polyamide 610 (nylon 610), polytetramethylene terephthalamide (nylon 4T), polyhexamethylene terephthalamide (nylon 6T), polymethaxylylene adipamide (nylon MXD6), polynonamethylene terephthalamide (nylon 9T), and polydecamethylene terephthalamide (nylon 10T); polyester-based resins other than the liquid crystal polyester, such as polyethylene terephthalate, polyethylene naphthalate, polybutylene terephthalate, and polytrimethylene terephthalate; polysulfone-based resins such as modified polysulfone, polyethersulfone, polysulfone, and polyphenylsulfone; polyphenylene sulfide-based resins such as linear polyphenylene sulfide, crosslinked polyphenylene sulfide, and semi-crosslinked polyphenylene sulfide; polyetherketone-based resins such as polyetherketone, polyetheretherketone, and polyetherketoneketone; polyimides such as thermoplastic polyimide, polyamidoimide, and polyetherimide; and thermoplastic resins such as polycarbonate and polyphenylene ether.

The proportion of the above-described thermoplastic resin with respect to 100 mass% of the liquid crystal polyester resin pellets is preferably equal to or greater than 1 mass% and equal to or smaller than 54.5 mass%, more preferably equal to or greater than 1 mass% and equal to or smaller than 53.5 mass%, even more preferably equal to or greater than 9.1 mass% and equal to or smaller than 53.5 mass%, still more preferably equal to or greater than 16.7 mass% and equal to or smaller than 52.4 mass%, and particularly preferably equal to or greater than 16.7 mass% and equal to or smaller than 50.0 mass%.

<Fibrous Filler>

The fibrous filler in the liquid crystal polyester resin pellets of the present embodiment has a length-weighted average fiber length of equal to or greater than 4 mm and smaller than 50 mm. The length-weighted average fiber length of the fibrous filler is preferably equal to or greater than 4.5 mm, more preferably equal to or greater than 5.0 mm, even more preferably equal to or greater than 5.5 mm, and particularly preferably equal to or greater than 6 mm. The length-weighted average fiber length of the fibrous filler is smaller than 50 mm, preferably equal to or smaller than 45 mm, more preferably equal to or smaller than 42 mm, even more preferably equal to or smaller than 40 mm, still more preferably equal to or smaller than 36 mm, even still more preferably equal to or smaller than 30 mm, and particularly preferably equal to or smaller than 20 mm.

That is, the length-weighted average fiber length of the fibrous filler in the liquid crystal polyester resin pellets is preferably equal to or greater than 4.5 mm and equal to or smaller than 45 mm, more preferably equal to or greater than 5.0 mm and equal to or smaller than 42 mm, even more preferably equal to or greater than 5.5 mm and equal to or smaller than 40 mm, still more preferably equal to or greater than 6 mm and equal to or smaller than 30 mm, and particularly preferably equal to or greater than 6 mm and equal to or smaller than 20 mm.

By setting the fiber length of the fibrous filler in the liquid crystal polyester resin pellets of the present embodiment to equal to or greater than 4 mm and smaller than 50 mm, when the liquid crystal polyester resin pellets are injection-molded, the length-weighted average fiber length of the fibrous filler in the liquid crystal polyester resin molded article can be easily maintained to be long, and it is easy to mold a molded article having a small notch sensitivity in the Charpy impact test.

The fibrous filler is a fibrous filler, which may be an inorganic filler or an organic filler.

Examples of the fibrous inorganic filler include glass fibers; carbon fibers such as PAN-based carbon fiber, pitch-based carbon fiber, rayon-based carbon fiber, phenol-based carbon fibers, and lignin-based carbon fiber; ceramic fibers such as silica fiber, alumina fiber, and silica alumina fiber; metallic fibers such as iron, gold, copper, aluminum, brass, and stainless steel; silicon carbide fibers; and boron fibers. Examples of the fibrous inorganic filler include whiskers such as potassium titanate whiskers, barium titanate whiskers, wollastonite whiskers, aluminum borate whiskers, silicon nitride whiskers, and silicon carbide whiskers.

Examples of the fibrous organic filler include polyester fibers, para and metaaramid fibers, and PBO fibers. In consideration of wear load and availability given to the apparatus during molding, as the fibrous filler, at least one selected from the group consisting of carbon fibers such as PAN-based or pitch-based fiber and glass fibers is more preferable. In addition, for the purpose of imparting conductivity, a fibrous filler coated with a metal such as nickel, copper, and ytterbium may be used.

The tensile strength of the carbon fiber is preferably equal to or greater than 2000 MPa, more preferably equal to or greater than 3000 MPa, and even more preferably equal to or greater than 4000 MPa. In addition, a tensile elongation of the carbon fiber is preferably equal to or greater than 0.5%, more preferably equal to or greater than 1.0%, and even more preferably equal to or greater than 1.8%, and by using carbon fiber having high tensile strength and high elongation, fiber breakage during processing up to production of the molded article is suppressed, and the fiber can be left for a long time, so that the effect of the invention can be easily obtained.

The tensile strength and tensile elongation of the carbon fiber mean values measured in accordance with JIS R 7606:2000.

Among these, PAN-based carbon fiber can be preferably used from the viewpoint that PAN-based carbon fiber has a good balance of tensile strength, tensile elastic modulus, and tensile elongation, and can leave a long residual fiber length in the molded article.

Examples of the PAN-based carbon fiber include "TORAYCA (registered trademark)" manufactured by Toray Co., Ltd., "PYROFIL (registered trademark)" manufactured by Mitsubishi Chemical Co., Ltd., and "Tenax (registered trademark)" manufactured by Teijin Co., Ltd.

Examples of the pitch-based carbon fiber include "DIALEAD (registered trademark)" manufactured by Mitsubishi Chemical Co., Ltd., "GRANOC (registered trademark)" manufactured by Nippon Graphite Fiber Co., Ltd., "DONACARBO (registered trademark)" manufactured by Osaka Gas Chemical Co., Ltd., and "KRECA (registered trademark)" manufactured by Kureha Corporation.

Examples of the glass fiber include glass fiber for FRP reinforcement, such as E-glass (that is, non-alkali glass), S-glass or T-glass (that is, high strength and high elasticity glass), C-glass (that is, glass for acid-resistant applications), D-glass (that is, low dielectric constant glass), ECR-glass (that is, E-glass substitute glass which does not include $B_2O_3$ and $F_2$), and AR-glass (that is, glass for alkali-resistant applications). Among these, E-glass is preferably used because of its balance of strength and elastic modulus and its availability.

The number-average fiber diameter of the fibrous filler is not particularly limited, but is preferably 1 $\mu$m to 40 $\mu$m and preferably 3 $\mu$m to 35 $\mu$m.

When the fibrous filler is carbon fiber, 1 $\mu$m to 15 $\mu$m is preferable, 3 $\mu$m to 10 $\mu$m is more preferable, and 4 $\mu$m to 9 $\mu$m is even more preferable.

When the fibrous filler is glass fiber, 5 $\mu$m to 35 $\mu$m is preferable, 10 $\mu$m to 25 $\mu$m is more preferable, and 15 $\mu$m to 25 $\mu$m is even more preferable.

As the number-average fiber diameter of the fibrous filler, the fibrous filler is observed with a microscope (500 times), and the number average value of measured fiber diameters of 500 fibrous fillers is adopted.

When the number-average fiber diameter of the fibrous filler is equal to or greater than the lower limit value of the above-described preferred range, the fibrous filler is likely to be dispersed in the liquid crystal polyester resin pellets. In addition, it is easy to handle the fibrous filler in a case of producing the liquid crystal polyester resin pellets. On the other hand, in a case of being equal to or smaller than the upper limit value of the above-described preferred range, the liquid crystal polyester is efficiently strengthened by the fibrous filler. Therefore, it is possible to impart excellent Charpy impact strength to a molded article obtained by molding the liquid crystal polyester resin pellets of the present embodiment.

The fibrous filler may be treated with a sizing-agent. A fibrous filler which is appropriately sized has excellent productivity and quality stability during pellets production, and can reduce the variation of physical properties in the molded article.

The sizing-agent in the present invention is not particularly limited, and examples thereof include nylon-based polymers, polyether-based polymers, epoxy-based polymers, ester-based polymers, urethane-based polymers, and mixed polymers thereof or modified polymers of each of the above. In addition, it is also possible to use known coupling agents such as so-called silane coupling agents such as aminosilane and epoxysilane, and titanium coupling agents.

The fibrous filler used in the liquid crystal polyester resin pellets according to the embodiment of the present invention does not necessarily require the single fibers be arranged in one direction, but from the viewpoint of productivity in the process of producing the molding material, a state in which the single fibers are arranged in one direction and a fiber bundle is continuous over the length direction of the fibers is preferable.

When the fibrous filler is glass fiber, from the viewpoint of improving handleability and impregnation, the number of single threads in the fibrous filler is preferably equal to or greater than 1000 and equal to or smaller than 10000, more preferably equal to or greater than 1500 and equal to or smaller than 8000, and even more preferably equal to or greater than 2000 and equal to or smaller than 6000.

In addition, when the fibrous filler is carbon fiber, from the same viewpoint, the number of single threads in the fibrous filler is preferably equal to or greater than 10000 and equal to or smaller than 100000, more preferably equal to or greater than 10000 and equal to or smaller than 50000, and even more preferably equal to or greater than 10000 and equal to or smaller than 30000.

The proportion of the fibrous filler in the liquid crystal polyester resin pellets of the present embodiment is equal to or greater than 1 part by mass with respect to 100 parts by mass of the above-described thermoplastic resin, preferably equal to or greater than 10 parts by mass and more preferably equal to or greater than 20 parts by mass.

The above-described proportion of the fibrous filler is equal to or smaller than 120 parts by mass with respect to 100 parts by mass of the above-described thermoplastic resin, preferably smaller than 115 parts by mass, more preferably equal to or smaller than 110 parts by mass, and particularly preferably equal to or smaller than 100 parts by mass.

The above-described proportion of the fibrous filler is equal to or greater than 1 part by mass and smaller than 120 parts by mass with respect to 100 parts by mass of the above-described thermoplastic resin, preferably equal to or greater than 1 part by mass and equal to or smaller than 115 parts by mass, more preferably equal to or greater than 10 parts by mass and equal to or smaller than 115 parts by mass, even more preferably equal to or greater than 20 parts by mass and equal to or smaller than 110 parts by mass, and particularly preferably equal to or greater than 20 parts by mass and equal to or smaller than 100 parts by mass.

The proportion of the fibrous filler is preferably equal to or greater than 0.99 mass% with respect to 100 mass% of the above-described liquid crystal polyester resin pellets, more preferably equal to or greater than 9.1 mass%, and even more preferably equal to or greater than 16.7 parts by mass.

The proportion of the fibrous filler is preferably smaller than 54.5 mass% with respect to 100 mass% of the above-described liquid crystal polyester resin pellets, preferably equal to or smaller than 53.5 mass%, even more preferably equal to or smaller than 52.4 mass%, and particularly preferably equal to or smaller than 50.0 mass%.

The above-described proportion of the fibrous filler is preferably equal to or greater than 0.99 mass% and smaller than 54.5 mass% with respect to 100 mass% of the above-described liquid crystal polyester resin pellets, more preferably equal to or greater than 9.1 mass% and equal to or smaller than 53.5 mass%, even more preferably equal to or greater than 16.7 mass% and equal to or smaller than 53.5 mass%, still more preferably equal to or greater than 16.7 mass% and equal to or smaller than 52.4 mass%, and particularly preferably equal to or greater than 16.7 mass% and equal to or smaller than 50 mass%.

When the proportion of the fibrous filler is equal to or greater than the lower limit value of the above-described preferred range, the impact mitigation effect of the fibrous filler is likely to be enhanced. On the other hand, in a case of being smaller than or equal to or smaller than the upper limit value of the above-described preferred range, by facilitating opening of the fibrous filler, pellets having good impregnation can be obtained, and the effect of the invention can be stably obtained.

<Other components>

The liquid crystal polyester resin pellets of the present embodiment may include one or more other components such as a filler and an additive as a raw material, as necessary, in addition to the above-described thermoplastic resin comprising a liquid crystal polyester and the above-described fibrous filler.

The filler may be a plate-shaped filler, spherical filler, or other granular fillers. In addition, the filler may be inorganic fillers or organic fillers.

Examples of the plate-shaped inorganic filler include talc, mica, graphite, wollastonite, glass flakes, barium sulfate, and calcium carbonate. Mica may be muscovite, phlogopite, fluorophlogopite, or tetrasilicic mica.

Examples of the granular inorganic filler include silica, alumina, titanium oxide, glass beads, glass balloons, boron nitride, silicon carbide, and calcium carbonate.

Examples of the additive include flame retardants, conductivity imparting agents, crystal nucleating agents, UV absorbers, antioxidants, anti-vibration agents, antibacterial agents, insect repellents, deodorants, coloring inhibitors, thermal stabilizers, mold release agents, antistatic agents, plasticizers, lubricants, colorants, pigments, dyes, foaming agents, antifoaming agents, viscosity modifiers, and surfactants. However, in the liquid crystal polyester resin pellets of the present embodiment, it is preferable that fullerene present in the vicinity of the interface between the carbon fiber bundle and the liquid crystal polyester resin is excluded.

In the liquid crystal polyester resin pellets of the present embodiment, the above-described pellets contain the fibrous filler in the amount of equal to or greater than 1 part by mass and smaller than 120 parts by mass with respect to 100 parts by mass of the above-described thermoplastic resin, and the length-weighted average fiber length of the above-described fibrous filler is equal to or greater than 4 mm and smaller than 50 mm.

In the liquid crystal polyester resin pellets of the present embodiment, it is preferable that the above-described pellets contain the fibrous filler in the amount of equal to or greater than 1 part by mass and equal to or smaller than 115 parts by mass with respect to 100 parts by mass of the above-described thermoplastic resin, and the length-weighted average fiber length of the above-described fibrous filler is equal to or greater than 4.5 mm and equal to or smaller than 45 mm,

in the liquid crystal polyester resin pellets of the present embodiment, it is more preferable that the above-described pellets contain the fibrous filler in the amount of equal to or greater than 10 part by mass and equal to or smaller than 115 parts by mass with respect to 100 parts by mass of the above-described thermoplastic resin, and the length-weighted average fiber length of the above-described fibrous filler is equal to or greater than 5.0 mm and equal to or smaller than 42 mm, and

in the liquid crystal polyester resin pellets of the present embodiment, it is particularly preferable that the above-described pellets contain the fibrous filler in an amount of equal to or greater than 20 part by mass and equal to or smaller than 110 parts by mass with respect to 100 parts by mass of the above-described thermoplastic resin, and the length-weighted average fiber length of the above-described fibrous filler is equal to or greater than 5.5 mm and equal to or smaller than 40 mm.

In the liquid crystal polyester resin pellets of the present embodiment, the above-described fibrous filler may be contained in an amount of equal to or greater than 25 part by mass and equal to or smaller than 100 parts by mass with respect to 100 parts by mass of the above-described thermoplastic resin, and the length-weighted average fiber length of the above-described fibrous filler may be equal to or greater than 4 mm and equal to or smaller than 42 mm.

The liquid crystal polyester resin pellets of the present invention has the following aspects.

"1" Liquid crystal polyester resin pellets containing:

a thermoplastic resin comprising a liquid crystal polyester; and
a fibrous filler,
in which the pellets contain the fibrous filler in an amount of equal to or greater than 1 part by mass and smaller than 120 parts by mass with respect to 100 parts by mass of the thermoplastic resin, and
a length-weighted average fiber length of the fibrous filler is equal to or greater than 4 mm and smaller than 50 mm.

"2" The liquid crystal polyester resin pellets according to "1",

the fibrous fillers are arranged in one direction, and
a fiber length of the fibrous filler is substantially the same as a length of the liquid crystal polyester resin pellets.

"3" The liquid crystal polyester resin pellets according to "1" or "2",
the proportion of the liquid crystal polyester is equal to or greater than 80 mass% and equal to or smaller than 100 mass% with respect to 100 mass% of the thermoplastic resin.
"4" The liquid crystal polyester resin pellets according to any one of "1" to "3",
in which the pellets contain the fibrous filler in an amount of equal to or greater than 1 part by mass and equal to or smaller than 100 parts by mass with respect to 100 parts by mass of the thermoplastic resin.
"5" The liquid crystal polyester resin pellets according to any one of "1" to "3",
the proportion of the fibrous filler is equal to or greater than 1 part by mass and equal to or smaller than 115 parts by mass with respect to 100 parts by mass of the thermoplastic resin, preferably equal to or greater than 10 parts by mass and equal to or smaller than 115 parts by mass, more preferably equal to or greater than 20 parts by mass and equal to or smaller than 110 parts by mass, and even more preferably equal to or greater than 20 parts by mass and equal to or smaller than 100 parts by mass.
"6" The liquid crystal polyester resin pellets according to any one of "1" to "5", in which the liquid crystal polyester comprises a repeating unit represented by Formula (1), (2), or (3),

the amount of the repeating unit represented by Formula (1) is equal to or greater than 30 mol% and equal to or smaller than 100 mol% with respect to a total amount of the repeating units represented by Formulae (1), (2), and (3), preferably equal to or greater than 30 mol% and equal to or smaller than 90 mol%, more preferably equal to or greater than 40 mol% and equal to or smaller than 80 mol%, and even more preferably equal to or greater than 50 mol% and equal to or smaller than 70 mol%,
the amount of the repeating unit represented by Formula (2) is equal to or greater than 0 mol% and equal to or smaller than 35 mol% with respect to the total amount of the repeating units represented by Formulae (1), (2), and (3), preferably equal to or greater than 10 mol% and equal to or smaller than 35 mol%, more preferably equal to or greater than 15 mol% and equal to or smaller than 30 mol%, and even more preferably equal to or greater than 17.5 mol% and equal to or smaller than 27.5 mol%, and
the amount of the repeating unit represented by Formula (3) is equal to or greater than 0 mol% and equal to or smaller than 35 mol% with respect to the total amount of the repeating units represented by Formulae (1), (2), and (3), preferably equal to or greater than 10 mol% and equal to or smaller than 35 mol%, more preferably equal to or greater than 15 mol% and equal to or smaller than 30 mol%, and even more preferably equal to or greater than 17.5 mol% and equal to or smaller than 27.5 mol%.

However, the total amount of the repeating units represented by Formulae (1), (2), and (3) does not exceed 100 mol%.

(1)                  $-O-Ar^1-CO-$

(2)                  $-CO-Ar^2-CO-$

(3)                  $-X-Ar^3-Y-$

(In Formulae (1) to (3), $Ar^1$ represents a phenylene group, a naphthylene group, or a biphenylylene group, $Ar^2$ and $Ar^3$ each independently represent a phenylene group, a naphthylene group, a biphenylene group, or a group represented by Formula (4), X and Y each independently represent an oxygen atom or an imino group, and hydrogen atoms in the group represented by $Ar^1$, $Ar^2$, or $Ar^3$ may be each independently substituted with a halogen atom, an alkyl group, or an aryl group.)

(4)                  $-Ar^4-Z-Ar^5-$

(In Formula (4), $Ar^4$ and $Ar^5$ each independently represent a phenylene group or a naphthylene group, and Z represents an oxygen atom, a sulfur atom, a carbonyl group, a sulfonyl group, or an alkylidene group.)

"7" The liquid crystal polyester resin pellets according to any one of "1" to "6",
in which the fibrous filler is at least one selected from the group consisting of a carbon fiber and a glass fiber.
"8" The liquid crystal polyester resin pellets according to any one of "1" to "7",
a notched Charpy impact strength Ea of a specimen having a 45° V-shaped groove with a depth of 2 mm in a center of a length of 80 mm, a width of 10 mm, and a thickness of 4 mm, which is produced using the liquid crystal polyester resin pellets, and an unnotched Charpy impact strength Eb of a specimen with a length of 80 mm, a width of 10 mm, and a thickness of 4 mm, which is produced using the liquid crystal polyester resin pellets satisfy Expression (5),

$$1 - (Ea / Eb) \leq 0.4 \quad \cdots (5)$$

(however, the specimen with a length of 80 mm, a width of 10 mm, and a thickness of 4 mm is produced by an injection molding article using liquid crystal polyester resin pellets at an injection speed of 20 mm/s, a screw rotation speed of 100 rpm, a holding pressure of 100 MPa, and a back pressure of 0 MPa, and the specimen having a 45° V-shaped groove with a depth of 2 mm in the center of a length of 80 mm, a width of 10 mm, and a thickness of 4 mm is produced by applying a notch processing with a notch angle of 45° and a depth of 2 mm to the center of the specimen having a length of 80 mm, a width of 10 mm, and a thickness of 4 mm).
"9" The liquid crystal polyester resin pellets according to any one of "1" to "7",
the number-average fiber diameter of the fibrous filler is 1 $\mu$m to 40 $\mu$m, preferably 3 $\mu$m to 35 $\mu$m and more preferably 4 $\mu$m to 25 $\mu$m.
"10" The liquid crystal polyester resin pellets according to any one of "1" to "9",
fullerene present in the vicinity of an interface between a carbon fiber bundle and a liquid crystal polyester resin is excluded.
"11" The liquid crystal polyester resin pellets according to any one of "1" to "10",
the proportion of the liquid crystal polyester with respect to 100 mass% of the thermoplastic resin is preferably equal to or greater than 85 mass% and equal to or smaller than 100 mass% and more preferably equal to or greater than 90 mass% and equal to or smaller than 100 mass%.

(Production Method for Liquid Crystal Polyester Resin Pellets)

A production method for the liquid crystal polyester resin pellets of the present embodiment will be described. For example, a molten product of a thermoplastic resin obtained by melt-kneading a liquid crystal polyester and other components as necessary is impregnated into a fibrous filler and pelletized, pellets in which the fibrous filler is hardened with the thermoplastic resin comprising the liquid crystal polyester can be obtained.

It is preferable that the production method for the liquid crystal polyester resin pellets of the present embodiment includes a step of impregnating a fiber bundle, which is a raw material of the above-described fibrous filler, with the above-described thermoplastic resin in a molten state to obtain a strand-shaped resin structure, and a step of cutting the strand-shaped resin structure.

Fig. 1 is a schematic view showing an example of a production equipment of the liquid crystal polyester resin pellets of the present embodiment.

In the present embodiment shown in Fig. 1, a case where liquid crystal polyester resin pellets 15 are obtained by using a fiber bundle 11 in which a plurality of fiber materials are converged will be described.

As shown in Fig. 1, a production equipment 100 is provided with a preheating part 121, an impregnation part 123, a cooling part 125, a haul-off part 127, a pelletizer 129, and feeding rolls 101 to 109.

Fig. 1 shows a state in which the fiber bundle 11 is continuously unrolled from a fiber roving 10. In the present embodiment, the liquid crystal polyester resin pellets are produced while the fiber bundle 11 unrolled from the fiber roving 10 is transported in a longitudinal direction by the feeding rolls 101 to 109.

A fineness of the fiber bundle 11 used for producing the liquid crystal polyester resin pellets of the present embodiment is not particularly limited, but is preferably equal to or greater than 200 g/1000 m and more preferably equal to or greater than 800 g/1000 m. When the fineness of the fiber bundle 11 is equal to or greater than 200 g/1000 m, the fiber bundle 11 can be easily handled in the production of the liquid crystal polyester resin pellets.

In addition, the fineness of the fiber bundle 11 is preferably equal to or smaller than 3750 g/1000 m and more preferably equal to or smaller than 3200 g/1000 m. When the fineness of the fiber roving 10 is equal to or smaller than 3750 g/1000 m, the fiber bundle 11 is easily defibrated and easily dispersed in the liquid crystal polyester resin pellets. In addition, it is easy to handle the fiber bundle 11 in a case of producing the liquid crystal polyester resin pellets.

In the preheating part 121, the fiber bundle 11 unrolled from the fiber roving 10 is preheated and dried. The heating temperature in this case is not particularly limited, but is, for example, 100°C to 200°C.

In addition, the heating time in the preheating part 121 is not particularly limited, and is, for example, 10 seconds to 5 minutes.

In the impregnation part 123, a resin material M (liquid crystal polyester, other components blended as necessary) is impregnated into the fiber bundle 11.

The resin material M may be put in from a supply port 123a and the molten product obtained by heating in the impregnation part 123 may be impregnated into the fiber bundle 11, or the resin material M in a molten state may be put in from a supply port 123a of an extruder 120 and impregnated into the fiber bundle 11.

In the embodiment shown in Fig. 1, a resin structure 13 is obtained in which the molten product is impregnated into and coated on the fiber bundle 11. Finally, the strand-shaped resin structure 13 is cut to obtain the liquid crystal polyester resin pellets 15 containing the thermoplastic resin comprising the liquid crystal polyester and the fibrous filler.

The heating temperature in the impregnation part 123 is appropriately determined according to the type of the liquid crystal polyester and is preferably set at a temperature higher than the flow starting temperature of the liquid crystal polyester used by 10°C to 80°C, for example, set to 300°C to 400°C.

In the impregnation part 123, depending on characteristics and the like required for the liquid crystal polyester resin pellets, the fiber roving is impregnated with 1 part by mass to 120 parts by mass, preferably 2 to 100 parts by mass, and more preferably 5 parts by mass to 80 parts by mass with respect to 100 parts by mass of the liquid crystal polyester. When the blending amount of the fiber roving is equal to or greater than the lower limit value of the above-described preferred range, by covering the fiber roving with the liquid crystal polyester, friction is reduced and pellets productivity is improved. On the other hand, in a case of being equal to or smaller than the upper limit value of the above-described preferred range, the fiber bundle is easily opened and a strand having good impregnation can be obtained.

In the cooling part 125, the resin structure 13 heated in the impregnation part 123 is cooled to, for example, 200°C. The cooling time is not particularly limited, but is, for example, 5 seconds to 1 minute.

In the haul-off part 127, the strand-shaped resin structure 13 cooled in the cooling part 125 is continuously hauled on and fed to the next pelletizer (cut part 129).

In the pelletizer (cut part 129), the strand-shaped resin structure 13 after cooling is cut to a desired length to produce the liquid crystal polyester resin pellets 15. The pelletizer 129 includes, for example, a rotary blade or the like.

As the liquid crystal polyester resin pellets of the present embodiment, using the above-described production equipment 100, more specifically, pellets in which the fibrous filler is hardened with the above-described thermoplastic resin comprising the liquid crystal polyester are produced as follows.

<Step of Obtaining Resin Structure>

First, the fiber bundle 11 is preheated and dried in the preheating part 121 while continuously feeding out the fiber bundle 11 from the fiber roving 10.

Next, in the impregnation part 123, the molten product of the resin material M is impregnated into the fiber bundle 11 after drying. As a result, the resin structure 13 in which the above-described molten product is impregnated into and coated with the fiber bundle 11 is obtained. After that, the resin structure 13 heated in the impregnation part 123 is cooled in the cooling part 125.

In the resin structure 13 obtained here, the fiber bundles 11 are arranged substantially in parallel to the longitudinal direction of the strand-shaped resin structure 13.

Here, "arranged substantially in parallel" refers to a state in which a long axis of the fibrous filler and a long axis of the liquid crystal polyester resin pellet are oriented in the same direction, and a deviation of angles between the axes is preferably equal to or smaller than 20°, more preferably equal to or smaller than 10°, and even more preferably equal to or smaller than 5°.

<Step of Obtaining Pellets>

Next, the strand-shaped resin structure 13 after cooling is hauled on in the haul-off part 127 and fed out to the cut part 129. Next, in the cut part 129, the strand-shaped resin structure 13 is cut to a predetermined length in the longitudinal direction thereof to obtain the liquid crystal polyester resin pellets 15.

In the liquid crystal polyester resin pellets 15, the fibrous filler is hardened with the thermoplastic resin comprising the liquid crystal polyester, and the fibrous fillers are arranged substantially in parallel to the longitudinal direction of the pellets, that is, the fibrous fillers are arranged in one direction. In addition, the length-weighted average fiber length of the fibrous fillers arranged in the liquid crystal polyester resin pellets 15 is substantially the same as the length of the liquid crystal polyester resin pellets 15. A preferred length of the liquid crystal polyester resin pellets 15 produced in the present embodiment depends on required performance of the molded article using the liquid crystal polyester resin pellets 15 as a molding material, but for example, is equal to or greater than 4 mm and smaller than 50 mm. The length of the liquid crystal polyester resin pellets 15 is preferably equal to or greater than 4.5 mm, more preferably equal to or greater than 5.0 mm, even more preferably equal to or greater than 5.5 mm, and particularly preferably equal to or greater than 6 mm. The preferred length of the liquid crystal polyester resin pellets 15 is smaller than 50 mm, preferably equal to or smaller than 45 mm, more preferably equal to or smaller than 42 mm, even more preferably equal to or smaller than 40 mm, still more preferably equal to or smaller than 36 mm, even still more preferably equal to or smaller than 30 mm, and particularly preferably equal to or smaller than 20 mm. That is, the length of the liquid crystal polyester resin pellets 15 is preferably equal to or greater than 4.5 mm and equal to or smaller than 45 mm, more preferably equal to or greater than 5.0 mm and equal to or smaller than 42 mm, even more preferably equal to or greater than 5.5 mm and equal to or smaller than 40 mm, still more preferably equal to or greater than 6 mm and equal to or smaller than 30 mm, and particularly preferably equal to or greater than 6 mm and equal to or smaller than 20 mm.

As described above, when the fibrous fillers are arranged substantially in parallel to the longitudinal direction of the liquid crystal polyester resin pellets 15, the fibrous fillers are arranged in one direction, and the length-weighted average fiber length of the fibrous filler is substantially the same as the length of the liquid crystal polyester resin pellets, impact strength in a case of forming a molded article is improved. Here, "substantially the same as the length" means, for example, that the fibrous filler is not cut inside the liquid crystal polyester resin pellets 15, and the fibrous filler significantly shorter than the total length of the liquid crystal polyester resin pellets 15 is not substantially included.

The production method for the liquid crystal polyester resin pellets of the present invention has the following aspects.

"12" A production method for the liquid crystal polyester resin pellets according to any one of "1" to "11", includes:

a step of impregnating a fiber bundle, which is a raw material of the fibrous filler, with the thermoplastic resin in a molten state to obtain a strand-shaped resin structure, and
a step of cutting the strand-shaped resin structure.

"13" The production method for the liquid crystal polyester resin pellets according to "12",
the fineness of the fiber bundle is equal to or greater than 200 g/1000 m, preferably equal to or greater than 800 g/1000 m.
"14" The production method for the liquid crystal polyester resin pellets according to "12" or "13",
a fineness of the fiber bundle is equal to or smaller than 3750 g/1000 m, preferably equal to or smaller than 3200 g/1000 m.

(Production Method for Molded Article)

A production method for the molded article of the present embodiment include a step of molding the molded article using the above-described liquid crystal polyester resin pellets. The liquid crystal polyester resin pellets can be molded by a known molding method. As the production method for the molded article of the present embodiment, a melt molding method is preferable, and examples thereof include injection molding methods, extrusion molding methods such as a T-die method or an inflation method, compression molding methods, blow molding methods, vacuum molding methods, and press molding. Among these, an injection molding method is preferable.

For example, when the above-described liquid crystal polyester resin pellets are used as a molding material and molded by an injection molding method, the liquid crystal polyester resin pellets are melted using a known injection molding machine and the molten liquid crystal polyester resin composition is molded by injection into a mold.

Examples of the known injection molding machine include TR450EH3 manufactured by Sodick Co., Ltd. and a PS40E5ASE model hydraulic horizontal molding machine manufactured by Nissei Plastic Industrial Co., Ltd. Examples of the type of the injection molding machine include an in-line type injection molding machine with integrated pellets plasticization part and injection part, and a pre-plasticating type injection molding machine with independent pellets plasticization part and injection part. A pre-plasticating type injection molding machine is preferable because there is no check valve and the injection pressure can be reduced. Examples of the pre-plasticating type injection molding machine include TR450EH3 manufactured by Sodick Co., Ltd.

The length-weighted average fiber length of the above-described fibrous filler in the molded article molded using the above-described liquid crystal polyester resin pellets is preferably equal to or greater than 0.3 mm. The length-weighted average fiber length of the fibrous filler is more preferably equal to or greater than 0.4 mm, even more preferably equal to or greater than 0.5 mm, still more preferably equal to or greater than 0.6 mm, even still more preferably equal to or greater than 0.7 mm, and particularly preferably equal to or greater than 0.8 mm. The length-weighted average fiber length of the fibrous filler is preferably equal to or smaller than 50 mm, more preferably equal to or smaller than 10 mm, and particularly preferably equal to or smaller than 5.0 mm. When the length-weighted average fiber length of the fibrous filler is equal to or greater than the above-described lower limit value, the notch sensitivity tends to be small. When the length-weighted average fiber length of the fibrous filler is equal to or smaller than the above-described upper limit value, the fibrous filler is easier to mold.

In the molded article molded using the liquid crystal polyester resin pellets of the present embodiment, the proportion of a fibrous filler having a fiber length of equal to or greater than 1 mm with respect to 100 mass% of the fibrous filler is preferably equal to or greater than 8 mass% and equal to or smaller than 100 mass%, more preferably equal to or greater than 10 mass%, even more preferably equal to or greater than 20 mass%, and particularly preferably equal to or greater than 30 mass%.

The cylinder temperature of the injection molding machine is appropriately determined according to the type of the liquid crystal polyester and is preferably set at a temperature higher than the flow starting temperature of the liquid crystal polyester used by 10°C to 80°C, for example, set to 300°C to 400°C.

From the viewpoint of cooling speed and productivity of the liquid crystal polyester resin composition, a temperature of the mold is preferably set in a range of room temperature (for example, 23°C) to 180°C.

The production method for the molded article of the present invention has the following aspects.

"21" A production method for a molded article, includes:
a step of molding a molded article using the liquid crystal polyester resin pellets according to any one of "12" to "14".
"22" A production method for a molded article, includes:
a step of melting the liquid crystal polyester resin pellets obtained by the production method according to any one of "12" to "14" and injecting the molten liquid crystal polyester resin composition into a mold to form a molded article.
"23" The production method for a molded article according to "21" or "22",
the length-weighted average fiber length of the fibrous filler in the molded article is equal to or greater than 0.3 mm, preferably equal to or greater than 0.4 mm, more preferably equal to or greater than 0.5 mm, even more preferably equal to or greater than 0.6 mm, still more preferably equal to or greater than 0.7 mm, and even still more preferably equal to or greater than 0.8 mm.
"24" The production method for a molded article according to any one of "21" to "23",
the length-weighted average fiber length of the fibrous filler in the molded article is equal to or smaller than 50 mm, preferably equal to or smaller than 10 mm and more preferably equal to or smaller than 5.0 mm.

In the molded article obtained by the production method of the present embodiment, since liquid crystal polyester resin pellets having a small notch sensitivity, the degree of freedom in designing the molded article can be ensured.

The molded article obtained by the above-described production method of the present embodiment applied to any application to which the liquid crystal polyester resin is applicable in general and is particularly suitable for applications in the automotive field.

Examples of applications in the automotive field include, as an injection-molded article for automobile interior materials, injection-molded articles for ceiling materials, injection-molded articles for wheelhouse covers, injection-molded articles for trunk compartment linings, injection-molded articles for instrument panel surface materials, injection-molded articles for steering wheel covers, injection-molded articles for armrests, injection-molded articles for headrests, injection-molded articles for seat belt covers, injection-molded articles for shift lever boots, injection-molded articles for console boxes, injection-molded articles for horn pads, injection-molded articles for knobs, injection-molded articles for airbag covers, injection-molded articles for various trims, injection-molded articles for various pillars, injection-molded articles for door lock bezels, injection-molded articles for grab boxes, injection-molded articles for defroster nozzles, injection-molded articles for scuff plates, injection-molded articles for steering wheels, and injection-molded articles for steering column covers.

In addition, examples of applications in the automotive field include, as an injection-molded article for automobile exterior materials, injection-molded articles for bumpers, injection-molded articles for spoilers, injection-molded articles for mudguards, injection-molded articles for side moldings, injection-molded articles for radiator grills, injection-molded articles for wheel covers, injection-molded articles for wheel caps, injection-molded articles for cowl belts and grills, injection-molded articles for air outlets and louvers, injection-molded articles for air scoops, injection-molded articles for hood bulges, injection-molded articles for fenders, and injection-molded articles for back doors.

Examples thereof include, as a part in the engine room for automobiles, injection-molded articles for cylinders and head covers, injection-molded articles for engine mounts, injection-molded articles for air intake manifolds, injection-molded articles for throttle bodies, injection-molded articles for air intake pipes, injection-molded articles for radiator tanks, injection-molded articles for radiator support, injection-molded articles for water pump and inlet, injection-molded articles for water pump and outlet, injection-molded articles for thermostat housing, injection-molded articles for cooling fan, injection-molded articles for fan shroud, injection-molded articles for oil pan, injection-molded articles for oil filter housing, injection-molded articles for oil filler cap, injection-molded articles for oil level gauge, injection-molded articles for timing belt, injection-molded articles for timing belt cover, and injection-molded articles for engine covers.

Examples thereof include, as a fuel component for automobiles, fuel caps, fuel filler tubes, automotive fuel tanks, fuel sender modules, fuel cutoff valves, quick connectors, canisters, fuel delivery pipes, and fuel filler necks.

Examples thereof include, as a drive train component for automobiles, shift lever housing and propeller shaft.

Examples thereof include, as a part of chassis for automobiles, stabilizer and linkage rod.

Examples of other injection-molded articles for automobile parts include injection-molded articles for automobile headlamps, injection-molded articles for glass run channels, injection-molded articles for weather strips, injection-molded articles for hoses such as injection-molded articles for drain hoses and injection-molded articles for windshield washer tubes, injection-molded articles for tubes, injection-molded articles for rack and pinion boots, and injection-molded articles for gaskets.

In addition, in addition to the above, it is also possible to apply the molded article of the present embodiment to applications such as sensors, LED lamps, connectors, sockets, resistors, relay cases, switches, coil bobbins, capacitors, variable condenser cases, optical pickups, oscillators, various terminal boards, transformers, plugs, printed circuit boards, tuners, speakers, microphones, headphones, small motors, magnetic head bases, power modules, semiconductors, liquid crystal displays, FDD carriages, FDD chassis, motor brush holders, parabolic antennas, computer related parts, microwave oven parts, sound and voice equipment parts, lighting parts, air conditioner parts, office computer related parts, telephone and fax-related parts, and copier-related parts.

[Examples]

Hereinafter, the present invention will be described in more detail with reference to specific examples. However, the present invention is not limited to the examples shown below.

<Production of Liquid Crystal Polyester 1>

(1) Melt Polymerization

994.5 g of p-hydroxybenzoic acid (7.2 mol), 446.9 g of 4,4'-dihydroxybiphenyl (2.4 mol), 239.2 g of terephthalic acid (1.44 mol), 159.5 g of isophthalic acid (0.96 mol), and 1347.6 g of acetic anhydride (13.2 mol) were charged in a reaction vessel equipped with a stirring device, a torque meter, a nitrogen gas introduction pipe, a thermometer, and a reflux condenser, 0.2 g of 1-methylimidazole was added thereto, and the inside of the reaction vessel was thoroughly replaced with nitrogen gas.

Then, the temperature was increased from room temperature to 150°C over 30 minutes while stirring under a nitrogen gas stream, and the temperature was maintained at 150°C and refluxed for 1 hour.

Next, 0.9 g of 1-methylimidazole was added thereto, the temperature was increased from 150°C to 320°C for 2 hours and 50 minutes while distilling byproduct acetic acid and unreacted acetic anhydride, and a prepolymer was obtained at the time point when an increase in torque was recognized as a reaction termination.

(2) Solid Phase Polymerization

The prepolymer thus obtained was cooled to room temperature and pulverized with a coarse pulverizer to obtain a prepolymer powder. In a nitrogen atmosphere, the prepolymer powder was heated from room temperature to 220°C over 1 hour, heated from 220°C to 240°C over 0.5 hours, and held at 240°C for 10 hours to perform a solid phase polymerization. After the solid phase polymerization, a powder-like liquid crystal polyester 1 was obtained by cooling.

With respect to a total amount of all repeating units, the liquid crystal polyester 1 obtained above had 60 mol% of the repeating unit (1) in which $Ar^1$ is a 1,4-phenylene group, 8.0 mol% of the repeating unit (2) in which $Ar^2$ is a 1,3-phenylene group, 12 mol% of the repeating unit (2) in which $Ar^2$ is a 1,4-phenylene group, and 20.0 mol% of the repeating unit (3) in which $Ar^3$ is a 4,4'-biphenylylene group, and the flow starting temperature thereof was 291°C.

<Production of Liquid Crystal Polyester 2>

(1) Melt Polymerization

1034.99 g of 6-hydroxy-2-naphthoic acid (5.5 mol), 378.33 g of 2,6-naphthalenedicarboxylic acid (1.75 mol), 83.07 g of terephthalic acid (0.5 mol), 272.52 g of hydroquinone (2.475 mol; 0.225 mol excess with respect to the total amount of 2,6-naphthalenedicarboxylic acid and terephthalic acid), 1226.87 g of acetic anhydride (12 mol), and 0.17 g 1-methylimidazole as a catalyst were placed in a reaction vessel equipped with a stirring device, a torque meter, a nitrogen gas introduction pipe, a thermometer, and a reflux condenser, the gas in the reactor was replaced with nitrogen gas, and then the temperature was increased from room temperature to 145°C over 15 minutes while stirring under a nitrogen gas stream and refluxing was carried out at 145°C for 1 hour.

Next, while distilling off byproduct acetic acid and unreacted acetic anhydride, the temperature was increased from 145°C to 310°C over 3 hours and 30 minutes and maintained at 310°C for 3 hours, and then the resultant was extracted from the reaction vessel and cooled to room temperature. The obtained solid matter was pulverized with a pulverizer to a particle size of approximately 0.1 to 1 mm to obtain a prepolymer powder.

(2) Solid Phase Polymerization

In a nitrogen atmosphere, the prepolymer powder was heated from room temperature to 250°C over 1 hour, heated from 250°C to 310°C over 10 hours, and held at 310°C for 5 hours to perform a solid phase polymerization. After the solid phase polymerization, a powder-like liquid crystal polyester 2 was obtained by cooling. With respect to the total amount of all repeating units, the liquid crystal polyester 2 had 55 mol% of the repeating unit (1) in which $Ar^1$ is a 2,6-naphthylene group, 17.5 mol% of the repeating unit (2) in which $Ar^2$ is a 2,6-naphthylene group, 5 mol% of the repeating unit (2) in which $Ar^2$ is a 1,4-phenylene group, and 22.5 mol% of the repeating unit (3) in which $Ar^3$ is a 1,4-phenylene group, and the flow starting temperature thereof was 333°C.

<Production of Liquid Crystal Polyester 3>

(1) Melt Polymerization

Using a 3 liter four-necked separable flask including a Dimroth condenser, a distilling head including a nitrogen introducing pipe and a thermocouple for the measurement of an inner temperature attached thereto, and an anchor-shaped stirrer, and also including a thermocouple fit on the outside of the flask, 1207.3 g (8.74 mol) of 4-hydroxybenzoic acid, 608.4 g (3.23 mol) of 6-hydroxy-2-naphthoic acid, and 1345 g (13.2 mol) of acetic anhydride were charged into a polymerization tank. Under a nitrogen gas flow, the outer temperature of the flask was increased to 150°C by a mantle heater, and then an acetylation reaction was performed under reflux for approximately 3 hours while stirring at 200 rpm.

Following the acetylation reaction, the temperature was increased at 1 °C/min and maintained at 310°C to perform a melt polycondensation. During this reaction, acetic acid produced as a by-product in the polycondensation reaction was continuously distilled off. Sampling was performed 30 minutes after reaching 310°C during the polymerization, and the flow starting temperature was measured and found to be 230°C. After 35 minutes from reaching 230°C, stirring was stopped and the polymer could be easily taken out in a molten state. There was almost no adhesion to the polymerization tank and the stirring blade. The resulting prepolymer was cooled and solidified after a while. The yield was 1565 g (97.8% of the theoretical yield). The obtained prepolymer was made into a size of approximately 3 to 5 cm square, and then after pulverizing to an average particle size of 1 mm or less using a pulverizer, the flow starting temperature was measured and found to be 239°C. This prepolymer exhibited optical anisotropy in a case of being melted.

(2) Solid Phase Polymerization

The prepolymer was placed in an aluminum tray, charged in a nitrogen atmosphere furnace, and under a nitrogen atmosphere, heated from room temperature to 180°C for 3 hours and maintained at 180°C for 2 hours. Thereafter, the temperature was increased to 270°C over approximately 7.5 hours, maintained at 270°C for 5 hours, and then the resultant was allowed to cool and taken out to obtain a powder of a liquid crystal polyester 3 (advanced polymer). The weight loss here was 1.5 wt%.

With respect to a total amount of all repeating units, the liquid crystal polyester 3 obtained above had 73 mol% of the repeating unit (1) in which $Ar^1$ is a 1,4-phenylene group and 27 mol% of the repeating unit (1) in which $Ar^1$ is a 2,6-naphthalene group, and the flow starting temperature thereof was 287°C.

[Flow starting temperature of Liquid Crystal Polyester]

First, using a flow tester ("CFT-500 type" manufactured by Shimadzu Corporation), approximately 2 g of a liquid crystal polyester was filled into a cylinder equipped with a die having a nozzle with an inner diameter of 1 mm and a length of 10 mm. Next, the liquid crystal polyester was melted and extruded from the nozzle while the temperature was increased at a rate of 4°C/min under a load of 9.8 MPa (100 kg/cm$^2$) to measure a temperature (flow starting temperature) indicating a viscosity of 4,800 Pa·s (48,000 poise), and the temperature was used as a flow starting temperature of the liquid crystal polyester.

<Method for Measuring Length-weighted Average Fiber Length>

A length-weighted average fiber length of the fibrous filler in a resin pellets and an unnotched specimen (that is, a molded article) was measured by the following measuring method.

(1) First, as a test sample, an unnotched specimen, having a central portion length width 10 mm × length 20 mm × thickness 4 mm, was cut out. In addition, approximately 5 resin pellets were selected. The test sample was sintered in a muffle furnace to remove a resin component. Here, when the fibrous filler was carbon fiber, firing conditions were 500°C and 3 hours. When the fibrous filler was glass fiber, firing conditions were 600°C and 4 hours.

(2) A fibrous filler dispersion liquid was produced by dispersing only the fibrous filler in 500 mL of an aqueous solution containing 0.05 volume% of a surfactant (Micro90 manufactured by INTERNATIONAL PRODUCTS CORPORATION).

(3) A part of the dispersion liquid was taken out, fibers were observed with a microscope (VH-Z25 manufactured by KEYENCE CORPORATION, magnification: 10 to 20 times), and 5 images per sample were captured. Here, when the fibrous filler was carbon fiber, 50 mL was extracted from a 500 mL dispersion liquid and filtered under reduced pressure using KIRIYAMA ROHTO(No. 5C) with a 90 mm diameter, and images of the carbon fibrous filler dispersed on the filter paper were captured. When the fibrous filler was glass fiber, 50 mL was extracted from a 500 mL dispersion liquid and dispersed in a Petri dish, and images of the glass fibrous filler dispersed in the Petri dish was captured.

(4) The fiber length of all 5 captured images was measured using image processing software (WinROOF2018 manufactured by MITANI CORPORATION) as follows.

(Method for Measuring Fiber Length)

(a) A monochrome pixel conversion processing was performed on the captured images.

(b) A binarization processing was performed so that the captured fibers were colored.

(c) Measurement of the fiber length was performed using needle-shaped separation function of the image processing software.

(d) The fiber length of the fiber which could not be binarized in (c) or the fiber length of a curved fiber was measured by multi-point measurement, and a fiber in contact with an edge of the image was not measured.

However, in (c) and (d), fibers of 20 $\mu$m or less were judged to be noise and were not included in the measured number of fibers n. When n > 500, that is, the number n of fibers to be measured did not exceed 500, the process returned to (3), additional images are captured, and the measurement was performed until n exceeds 500.

(5) From the fiber length of the fibrous filler in the 5 images, the length-weighted average fiber length $lm = (\Sigma li^2 \times ni) / (\Sigma li \times ni)$ was determined ($\Sigma ni > 500$).

li: fiber length of fibrous filler
ni: number of fibrous fillers with fiber length li

<Proportion of Fibrous Filler having Fiber Length of equal to or greater than 1 mm>

In a case of measuring a length-weighted average fiber length, a histogram of the number fibers and a fiber length was created, and for fibers of equal to or greater than 1 mm, a proportion of the fibers of equal to or greater than 1 mm was obtained from number of fibers of equal to or greater than 1 mm/total number of fibers.

<Production of Liquid Crystal Polyester Resin Pellets>

(Example 1)

Using a production equipment having a form shown in Fig. 1, liquid crystal polyester resin pellets were obtained as follows. A GTS-40 type extruder (manufactured by PLABOR Research Laboratory of Plastics Technology Co., Ltd.) was used as an extruder. An EBD-1500A (manufactured by IMEX Corporation) was used as a belt haul-off machine.

• Step of Obtaining Resin Structure

By operating the belt haul-off machine (haul-off part 127) at a haul-off speed of 10 m/min, glass fibers (manufactured by Nitto Boseki Co., Ltd., RS110QL483AC, E-glass, number-average fiber diameter: 17 $\mu$m) were continuously fed from a fiber roving 10 as a fiber bundle at a haul-off speed of 10 m/min, and first heated to 200°C and dried in a preheating part 121.
Separately, using an extruder 120, the liquid crystal polyester 1 obtained in the above <Production of Liquid Crystal Polyester 1> was heated to 360°C to prepare a molten state.
Next, while supplying the dried fiber bundle (glass fiber) to a die (impregnation part 123) fit on a tip of the extruder 120, the molten liquid crystal polyester 1 (resin material M) was put in by the extruder from a supply port 123a of the extruder 120. The liquid crystal polyester 1 was melted in the die (impregnation part 123) at 360°C, and by impregnating 100 parts by mass of the liquid crystal polyester 1 with 67 parts by mass of the above-described glass fiber, a resin structure 13 in which the above-described glass fibers were arranged substantially in parallel to a longitudinal direction of the liquid crystal polyester resin layer was obtained.
Thereafter, the heated strand-shaped resin structure 13 in the die (impregnation part 123) was cooled to 150°C or lower by a cooling part 125.

• Step of Obtaining Pellets

Next, the cooled strand-shaped resin structure 13 was continuously hauled on by the belt haul-off machine (haul-off part 127), fed to a pelletizer (cut part 129), cut to a length of 4 mm in the longitudinal direction thereof to obtain liquid crystal polyester resin pellets 15 of Example 1, having a cylindrical shape. The length-weighted average fiber length of the fibrous filler (glass fiber) was 4 mm (Example 1).

(Examples 2 and 3)

Liquid crystal polyester resin pellets 15 of Examples 2 and 3 having a cylindrical shape having a predetermined length were obtained in the same manner as in Example 1, except that the cutting of the strand-shaped resin structure 13 having a length of 4 mm in the longitudinal direction in Example 1 was changed to cutting of the length of each liquid crystal polyester resin pellets shown in Table 1. The length-weighted average fiber lengths of the fibrous filler (glass fiber) were 12 mm (Example 2) and 42 mm (Example 3).

(Example 4)

Liquid crystal polyester resin pellets 15 of Example 4 having a cylindrical shape (length: 4 mm) were obtained in the same manner as in Example 1, except that the above-described glass fiber in Example 1 was changed to carbon fiber (manufactured by Mitsubishi Chemical Co., Ltd., PYROFIL (registered trademark) CF tow, TR50S15L, PAN-based carbon fiber, tensile strength: 4,900 MPa, tensile elongation: 2.1%, number-average fiber diameter: 7 $\mu$m). The length-weighted average fiber length of the fibrous filler (carbon fiber) was 4 mm.

(Examples 5 and 6)

Liquid crystal polyester resin pellets 15 of Examples 5 and 6 having a cylindrical shape having a predetermined length were obtained in the same manner as in Example 4, except that the cutting of the strand-shaped resin structure 13 having a length of 4 mm in the longitudinal direction in Example 4 was changed to cutting of the length of each liquid crystal polyester resin pellets shown in Table 1. The length-weighted average fiber lengths of the fibrous filler (carbon fiber) were 12 mm (Example 5) and 42 mm (Example 6).

(Example 7)

Liquid crystal polyester resin pellets 15 of Example 7 having a cylindrical shape (length: 12 mm) were obtained in the same manner as in Example 2, except that the 67 parts by mass of the above-described glass fiber with respect to 100 parts by mass of the liquid crystal polyester 1 in Example 2 was changed to 25 parts by mass of the above-described glass fiber. The length-weighted average fiber length of the fibrous filler (glass fiber) was 12 mm.

(Example 8)

Liquid crystal polyester resin pellets 15 of Example 8 having a cylindrical shape (length: 12 mm) were obtained in the same manner as in Example 2, except that the 67 parts by mass of the above-described glass fiber with respect to 100 parts by mass of the liquid crystal polyester 1 in Example 2 was changed to 100 parts by mass of the above-described glass fiber. The length-weighted average fiber length of the fibrous filler (glass fiber) was 12 mm.

(Example 9)

Liquid crystal polyester resin pellets 15 of Example 9 having a cylindrical shape (length: 12 mm) were obtained in the same manner as in Example 5, except that the 67 parts by mass of the above-described carbon fiber with respect to 100 parts by mass of the liquid crystal polyester 1 in Example 5 was changed to 25 parts by mass of the above-described carbon fiber. The length-weighted average fiber length of the fibrous filler (carbon fiber) was 12 mm.

(Example 10)

Liquid crystal polyester resin pellets 15 of Example 10 having a cylindrical shape (length: 12 mm) were obtained in the same manner as in Example 5, except that the 67 parts by mass of the above-described carbon fiber with respect to 100 parts by mass of the liquid crystal polyester 1 in Example 5 was changed to 100 parts by mass of the above-described carbon fiber. The length-weighted average fiber length of the fibrous filler (carbon fiber) was 12 mm.

(Example 11)

Using the above-described extruder, the liquid crystal polyester 2 obtained in the above <Production of Liquid Crystal Polyester 2> was heated to 380°C to prepare a molten state.
Next, as in Example 1, while supplying, as the fiber bundle, dried glass fiber (manufactured by Nitto Boseki Co., Ltd., RS110QL483AC, E-glass, number-average fiber diameter: 17 $\mu$m) to the die (impregnation part 123) fit on a tip of the extruder, the molten liquid crystal polyester 2 (resin material M) was put in by the extruder from a supply port 123a. The liquid crystal polyester 2 was melted in the die (impregnation part 123) at 380°C, and by impregnating 100 parts by mass of the liquid crystal polyester 2 with 67 parts by mass of the above-described glass fiber, a resin structure 13 in which the above-described glass fibers were arranged substantially in parallel to a longitudinal direction of the liquid crystal polyester resin layer was obtained. In the resin structure 13 obtained here, the above-described glass fibers were arranged substantially in parallel to the longitudinal direction of a liquid crystal polyester layer.
Thereafter, the heated resin structure 13 in the die (impregnation part 123) was cooled to 150°C or lower by a cooling part 125.
Next, the cooled strand-shaped resin structure 13 was continuously hauled on by the belt haul-off machine (haul-off part 127) at a haul-off speed of 10 m/min, fed to a pelletizer (cut part 129), cut to a length of 12 mm in the longitudinal direction thereof to obtain liquid crystal polyester resin pellets 15 of Example 11, having a cylindrical shape. The length-weighted average fiber length of the fibrous filler (glass fiber) was 12 mm.

(Example 12)

Liquid crystal polyester resin pellets 15 of Example 12 having a cylindrical shape (length: 12 mm) were obtained in the same manner as in Example 11, except that the 67 parts by mass of the above-described glass fiber with respect to 100 parts by mass of the liquid crystal polyester 2 in Example 11 was changed to 67 parts by mass of the above-described carbon fiber. The length-weighted average fiber length of the fibrous filler (carbon fiber) was 12 mm.

(Example 13)

Using the above-described extruder, the liquid crystal polyester 3 obtained in the above <Production of Liquid Crystal Polyester 3> was heated to 340°C to prepare a molten state.

Next, same as in Example 1, while supplying, as the fiber bundle 11, the dried glass fiber to a die (impregnation part 123) fit on a tip of the above-descried extruder, the molten liquid crystal polyester 3 (resin material M) was put in by the extruder from a supply port 123a. The liquid crystal polyester 3 was melted in the die (impregnation part 123) at 340°C, and by impregnating 100 parts by mass of the liquid crystal polyester 3 with 67 parts by mass of the above-described glass fiber, a resin structure 13 in which the above-described glass fibers were arranged substantially in parallel to a longitudinal direction of the liquid crystal polyester resin layer was obtained.

Thereafter, the resin structure 13 in a heated state in the die (impregnation part 123) was cooled to 150°C or lower by a cooling part 125.

Next, the cooled strand-shaped resin structure 13 was continuously hauled on by the belt haul-off machine (haul-off part 127) at a haul-off speed of 10 m/min, fed to a pelletizer (cut part 129), cut to a length of 12 mm in the longitudinal direction thereof to obtain liquid crystal polyester resin pellets 15 of Example 13, having a cylindrical shape. The length-weighted average fiber length of the fibrous filler (glass fiber) was 12 mm.

(Example 14)

Liquid crystal polyester resin pellets 15 of Example 14 having a cylindrical shape (length: 12 mm) were obtained in the same manner as in Example 13, except that the 67 parts by mass of the above-described glass fiber with respect to 100 parts by mass of the liquid crystal polyester 3 in Example 13 was changed to 67 parts by mass of the above-described carbon fiber. The length-weighted average fiber length of the fibrous filler (carbon fiber) was 12 mm.

(Comparative Example 1)

The liquid crystal polyester 1 obtained in the above <Production of Liquid Crystal Polyester 1> and glass fiber (manufactured by Nippon Electric Glass Co., Ltd., T747N, E-glass, cut length: 3 mm, number-average fiber diameter: 17 $\mu$m) were supplied to a twin-screw extruder (manufactured by Ikegai Corp., "PCM-30", cylinder temperature: 360°C) in a proportion of a blending amount shown in Table 3, and after melt-kneading, liquid crystal polyester resin pellets 15 of Comparative Example 1, having a cylindrical shape (length: 4 mm) and formed a liquid crystal polyester resin composition, were produced. The length-weighted average fiber length of the fibrous filler (glass fiber) was 0.25 mm.

(Comparative Example 2)

Liquid crystal polyester resin pellets of Comparative Example 2 having a cylindrical shape (length: 4 mm) were obtained in the same manner as in Comparative Example 1, except that the above-described glass fiber in Comparative Example 1 was changed to carbon fiber (manufactured by Mitsubishi Chemical Co., Ltd., PYROFIL (registered trademark) CF chop, TR03M, PAN-based carbon fiber, cut length: 6 mm, tensile strength: 4,830 GPa, tensile elongation: 1.9%, number-average fiber diameter: 7 $\mu$m). The length-weighted average fiber length of the fibrous filler (carbon fiber) was 0.22 mm.

(Comparative Example 3)

Liquid crystal polyester resin pellets 15 of Comparative Example 3 having a cylindrical shape (length: 50 mm) were obtained in the same manner as in Example 1, except that the cutting of the strand-shaped resin structure 13 having a length of 4 mm in the longitudinal direction in Example 1 was changed to cutting of a length of 50 mm. The length-weighted average fiber length of the fibrous filler (glass fiber) was 50 mm.

(Comparative Example 4)

Liquid crystal polyester resin pellets 15 of Comparative Example 4 having a cylindrical shape (length: 50 mm) were obtained in the same manner as in Comparative Example 3, except that the above-described glass fiber in Comparative Example 3 was changed to carbon fiber (manufactured by Mitsubishi Chemical Co., Ltd., PYROFIL (registered trademark) CF tow, TR50S15L, PAN-based carbon fiber, tensile strength: 4,900 MPa, tensile elongation: 2.1%, number-average fiber diameter: 7 $\mu$m). The length-weighted average fiber length of the fibrous filler (carbon fiber) was 50 mm.

(Comparative Examples 5 and 6)

An attempt was made to obtain pellets with a pellet length of 3 mm or less by adjusting a rotation speed of a rotary blade in the pelletizer (cut part 129), but the pellets were not cylindrical had a lot of floss.

(Comparative Example 7)

Liquid crystal polyester resin pellets 15 of Comparative Example 7 having a cylindrical shape (length: 12 mm) were obtained in the same manner as in Example 2, except that the 67 parts by mass of the above-described glass fiber with respect to 100 parts by mass of the liquid crystal polyester 1 in Example 2 was changed to 120 parts by mass of the above-described glass fiber. The length-weighted average fiber length of the fibrous filler (glass fiber) was 12 mm.

(Comparative Example 8)

Glass fiber reinforced with polypropylene (manufactured by Japan Polypropylene Corporation, FUNCSTER (registered trademark), LR24A, PP-GF 40 wt%, pellet length: 10 mm, length-weighted average fiber length of glass fiber in pellets: 10 mm) was used for evaluation as a resin pellets 15 of Comparative Example 8.

(Comparative Example 9)

Carbon fiber reinforced with polypropylene (manufactured by Daicel Polymer Ltd., PLASTRON (registered trademark), PP-CF40-01, PP-CF 40 wt%, pellet length: 8 mm, length-weighted average fiber length of carbon fiber in pellets: 8 mm) was used for evaluation as a resin pellets 15 of Comparative Example 9.

(Comparative Example 10)

Glass fiber reinforced with polyamide 66 (manufactured by Daicel Polymer Ltd., PLASTRON (registered trademark), PA66-GF50-01, PA66-GF 50 wt%, pellet length: 9 mm, length-weighted average fiber length of glass fiber in pellets: 9 mm) was used for evaluation as a resin pellets 15 of Comparative Example 10.

(Comparative Example 11)

Carbon fiber reinforced with polyamide 66 (manufactured by Daicel Polymer Ltd., PLASTRON (registered trademark) PA66-CF40-02, PA66-CF 40 wt%, pellet length: 9 mm, length-weighted average fiber length of carbon fiber in pellets: 9 mm) was used for evaluation as a resin pellets 15 of Comparative Example 11.

(Comparative Example 12)

Carbon fiber reinforced with polyphenylene sulfide (manufactured by Daicel Polymer Ltd., PLASTRON (registered trademark) PPS-CF40-02, PPS-CF 40 wt%, pellet length: 9 mm, length-weighted average fiber length of carbon fiber in pellets: 9 mm) was used for evaluation as a resin pellets 15 of Comparative Example 12.

<Production of Unnotched Injection-molded Specimen >

Each of the liquid crystal polyester resin pellets of Examples 1 to 10 and Comparative Example 1 and 2 was put into an injection molding machine TR450EH3 (manufactured by Sodick Co., Ltd.) having a molding temperature of 360°C, a multipurpose specimen (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa, and an unnotched specimen, having a width of 10 mm, a length of 80 mm, and a thickness of 4 mm, was cut out from the molded article, thereby producing unnotched injection-molded specimens (that is, molded articles) of Examples 1 to 10 and Comparative Examples 1 and 2. The length-weighted average fiber lengths of the fibrous filler in the unnotched injection-molded specimen are shown in Tables 1 to 3.

Each of the liquid crystal polyester resin pellets of Examples 11 and 12 was put into an injection molding machine TR450EH3 (manufactured by Sodick Co., Ltd.) having a molding temperature of 380°C, a multipurpose specimen (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa, and an unnotched specimen, having a width of 10 mm, a length of 80 mm, and a thickness of 4 mm, was cut out from the molded article, thereby producing unnotched injection specimens of Examples 11 and 12. The length-weighted average fiber lengths of the fibrous filler in the injection-molded unnotched specimen are shown in Table 2.

Each of the liquid crystal polyester resin pellets of Examples 13 and 14 was put into an injection molding machine TR450EH3 (manufactured by Sodick Co., Ltd.) having a molding temperature of 340°C, a multipurpose specimen (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa, and an unnotched specimen, having a width of 10 mm, a length of 80 mm, and a thickness of 4 mm, was cut out from the specimen, thereby producing unnotched injection-molded specimens of Examples 13 and 14. The length-weighted average fiber lengths of the fibrous filler in the unnotched injection-molded specimen are shown in Table 2.

When the liquid crystal polyester resin pellets 15 of Comparative Example 3 were put into an injection molding machine TR450EH3 (manufactured by Sodick Co., Ltd.) having a molding temperature of 360°C, the material was clogged under a hopper and could not be molded.

When the liquid crystal polyester resin pellets 15 of Comparative Example 4 were put into an injection molding machine TR450EH3 (manufactured by Sodick Co., Ltd.) having a molding temperature of 360°C, the material was clogged under a hopper and could not be molded.

When each of the resin pellets of Comparative Example 5 and 6 was put into an injection molding machine TR450EH3 (manufactured by Sodick Co., Ltd.) having a molding temperature of 360°C, the material was clogged under a hopper and could not be molded.

When the liquid crystal polyester resin pellets 15 of Comparative Example 7 were put into an injection molding machine TR450EH3 (manufactured by Sodick Co., Ltd.) having a molding temperature of 360°C, the material was clogged under a hopper and could not be molded.

Each of the resin pellets of Comparative Examples 8 and 9 was put into an injection molding machine TR450EH3 (manufactured by Sodick Co., Ltd.) having a molding temperature of 230°C, a multipurpose specimen (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa, and an unnotched specimen, having a width of 10 mm, a length of 80 mm, and a thickness of 4 mm, was cut out from the molded article, thereby producing unnotched injection-molded specimens of Comparative Examples 8 and 9. The length-weighted average fiber lengths of the fibrous filler in the unnotched injection-molded specimen are shown in Table 4.

Each of the resin pellets of Comparative Examples 10 and 11 was put into an injection molding machine TR450EH3 (manufactured by Sodick Co., Ltd.) having a molding temperature of 310°C, a multipurpose specimen (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa, and an unnotched specimen, having a width of 10 mm, a length of 80 mm, and a thickness of 4 mm, was cut out from the molded article, thereby producing injection-molded unnotched specimens of Comparative Examples 10 and 11. The length-weighted average fiber lengths of the fibrous filler in the unnotched injection-molded specimen are shown in Table 4.

The resin pellets of Comparative Example 12 were put into an injection molding machine TR450EH3 (manufactured by Sodick Co., Ltd.) having a molding temperature of 320°C, a multipurpose specimen (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa, and an unnotched injection-molded specimen, having a width of 10 mm, a length of 80 mm, and a thickness of 4 mm, was cut out from the molded article. The length-weighted average fiber lengths of the fibrous filler in the unnotched injection-molded specimen are shown in Table 4.

[Charpy Impact Strength of Unnotched injection-molded Specimen]

Using the unnotched injection-molded specimens of Examples 1 to 12 and Comparative Examples 1, 2, and 8 to 12, having a width of 10 mm, a length of 80 mm, and a thickness of 4 mm, a Charpy impact test was performed using hammers 2.0J and 4.0J in accordance with ISO179-1 and JIS K 7111-1. For a Charpy impact strength of the unnotched injection-molded specimen, an average value of 5 measurements was adopted. The results of the Charpy impact strength are shown in Tables 1 to 4.

[Charpy Impact Strength of Notched injection-molded Specimen]

Regarding the unnotched injection-molded specimens of Examples 1 to 12 and Comparative Examples 1, 2, and 8 to 12, having a width of 10 mm, a length of 80 mm, and a thickness of 4 mm, each notch processing was performed with a notch angle of 45° and a depth of 2 mm in accordance with ISO 2818 and JIS K 7144. A notching tool (model A-4, manufactured by Toyo Seiki Co., Ltd.) was used for the notch processing. Using the notched injection-molded specimen, a Charpy impact test was performed using hammers 2.0J and 4.0J in accordance with ISO179-1 and JIS K 7111-1. For a Charpy impact strength of the notched injection-molded specimen, an average value of 5 measurements was adopted. In addition, from the notched Charpy impact strength Ea and the unnnotched Charpy impact strength Eb , each notch sensitivity was obtained from Expression "1 - (Ea / Eb)". These results are shown in Tables 1 to 4.

[Table 1]

| | | | Example 1 | Example 2 | Example 3 | Example 4 | Example 5 | Example 6 | Example 7 |
|---|---|---|---|---|---|---|---|---|---|
| Resin pellets | Liquid crystal polyester 1 | Part by mass | 100 | 100 | 100 | 100 | 100 | 100 | 100 |
| | Liquid crystal polyester 2 | Part by mass | | | | | | | |
| | Liquid crystal polyester 3 | Part by mass | | | | | | | |
| | Fibrous filler (glass fiber) | Part by mass | 67 | 67 | 67 | | | | 25 |
| | Fibrous filler (carbon fiber) | Part by mass | | | | 67 | 67 | 67 | |
| | Length of liquid crystal polyester resin pellets | mm | 4 | 12 | 42 | 4 | 12 | 42 | 12 |
| | Length-weighted average fiber length of fibrous filler | mm | 4 | 12 | 42 | 4 | 12 | 42 | 12 |
| Molded article | Length-weighted average fiber length of fibrous filler | mm | 2.08 | 4.51 | 1.20 | 3.16 | 0.98 | 0.78 | 4.26 |
| | Charpy impact strength (unnotched) | kJ/m$^2$ | 59 | 67 | 40 | 30 | 19 | 25 | 48 |
| | Charpy impact strength (notched) | kJ/m$^2$ | 53 | 50 | 31 | 23 | 22 | 20 | 41 |
| | Notch sensitivity | - | 0.11 | 0.25 | 0.22 | 0.24 | -0.16 | 0.20 | 0.15 |

EP 4 011 975 A1

[Table 2]

| | | | Example 8 | Example 9 | Example 10 | Example 11 | Example 12 | Example 13 | Example 14 |
|---|---|---|---|---|---|---|---|---|---|
| Resin pellets | Liquid crystal polyester 1 | Part by mass | 100 | 100 | 100 | | | | |
| | Liquid crystal polyester 2 | Part by mass | | | | 100 | 100 | | |
| | Liquid crystal polyester 3 | Part by mass | | | | | | 100 | 100 |
| | Fibrous filler (glass fiber) | Part by mass | 100 | | | 67 | | 67 | |
| | Fibrous filler (carbon fiber) | Part by mass | | 25 | 100 | | 67 | | 67 |
| | Length of liquid crystal polyester resin pellets | mm | 12 | 12 | 12 | 12 | 12 | 12 | 12 |
| | Length-weighted average fiber length of fibrous filler | mm | 12 | 12 | 12 | 12 | 12 | 12 | 12 |
| Molded article | Length-weighted average fiber length of fibrous filler | mm | 3.75 | 3.26 | 0.75 | 0.75 | 1.51 | 1.25 | 1.00 |
| | Charpy impact strength (unnotched) | kJ/m$^2$ | 41 | 27 | 14 | 10 | 15 | 19 | 14 |
| | Charpy impact strength (notched) | kJ/m$^2$ | 35 | 22 | 10 | 9 | 12 | 15 | 12 |
| | Notch sensitivity | - | 0.15 | 0.19 | 0.29 | 0.10 | 0.20 | 0.21 | 0.14 |

[Table 3]

| | | Comparative Example 1 | Comparative Example 2 | Comparative Example 3 | Comparative Example 4 | Comparative Example 5 | Comparative Example 6 |
|---|---|---|---|---|---|---|---|
| Resin pellets | Liquid crystal polyester 1 | Part by mass | 100 | 100 | 100 | 100 | 100 | 100 |
| | Polypropylene | Part by mass | | | | | | |
| | Polyamide 66 | Part by mass | | | | | | |
| | Polyphenylene sulfide | Part by mass | | | | | | |
| | Fibrous filler (glass fiber) | Part by mass | 67 | | 67 | | 67 | |
| | Fibrous filler (carbon fiber) | Part by mass | | 67 | | 67 | | 67 |
| | Length of liquid crystal polyester resin pellets | mm | 4.0 | 4.0 | 50 | 50 | <3 | <3 |
| | Length-weighted average fiber length of fibrous filler | mm | 0.25 | 0.22 | 50 | 50 | <3 | <3 |
| Molded article | Length-weighted average fiber length of fibrous filler | mm | 0.23 | 0.20 | Cannot be molded | Cannot be molded | Cannot be molded | Cannot be molded |
| | Charpy impact strength (unnotched) | kJ/m² | 17 | 18 | Cannot be molded | Cannot be molded | Cannot be molded | Cannot be molded |
| | Charpy impact strength (notched) | kJ/m² | 10 | 6 | | | | |
| | Notch sensitivity | - | 0.41 | 0.67 | | | | |

[Table 4]

| Resin pellets | | | Comparative Example 7 | Comparative Example 8 | Comparative Example 9 | Comparative Example 10 | Comparative Example 11 | Comparative Example 12 |
|---|---|---|---|---|---|---|---|---|
| Resin pellets | Liquid crystal polyester 1 | Part by mass | 100 | | | | | |
| | Polypropylene | Part by mass | | 100 | 100 | | | |
| | Polyamide 66 | Part by mass | | | | 100 | 100 | |
| | Polyphenylene sulfide | Part by mass | | | | | | 100 |
| | Fibrous filler (glass fiber) | Part by mass | 120 | 67 | | 100 | | |
| | Fibrous filler (carbon fiber) | Part by mass | | | 67 | | 67 | 67 |
| | Length of resin pellets | mm | 12 | 10 | 8 | 9 | 9 | 9 |
| | Length-weighted average fiber length of fibrous filler | mm | 12 | 10 | 8 | 9 | 9 | 9 |
| Molded article | Length-weighted average fiber length of fibrous filler | mm | Cannot be molded | 1.01 | 0.73 | 1.57 | 0.77 | 0.76 |
| | Charpy impact strength (unnotched) | kJ/m$^2$ | | 68 | 29 | 106 | 86 | 31 |
| | Charpy impact strength (notched) | kJ/m$^2$ | | 17 | 12 | 25 | 16 | 7 |
| | Notch sensitivity | - | | 0.75 | 0.59 | 0.76 | 0.81 | 0.76 |

EP 4 011 975 A1

From the results shown in Tables 1 to 4, compared to the injection-molded specimens produced by using the resin pellets of Comparative Examples 1, 2, and 8 to 12, it was confirmed that the injection-molded specimens produced by using the liquid crystal polyester resin pellets of Examples 1 to 14 had a smaller notch sensitivity.

Since the liquid crystal polyester resin pellets of Examples had a small notch sensitivity, a degree of freedom in designing the molded article molded by using the liquid crystal polyester resin pellets could be ensured.

<Production of Unnotched Injection-molded Specimen >

(Examples 15 to 24)

Each of the liquid crystal polyester resin pellets of Examples 1 to 10 was put into an injection molding machine TR450EH3 (manufactured by Sodick Co., Ltd.) having a molding temperature of 360°C, a multipurpose specimen (type A1) compliant with JIS K 7139 was produced by injecting into a mold with a mold temperature of 100°C at an injection speed of 20 mm/s, a screw rotation speed of 250 rpm, a holding pressure of 100 MPa, and a back pressure of 25 MPa, and an unnotched specimen, having a width of 10 mm, a length of 80 mm, and a thickness of 4 mm, was cut out from the molded article, thereby producing unnotched injection-molded specimens (that is, molded articles) of Examples 15 to 24 (Tables 5 and 6). The length-weighted average fiber lengths of the fibrous filler in the unnotched injection-molded specimen are shown in Tables 5 and 6.

(Examples 25 and 26)

Each of the liquid crystal polyester resin pellets of Examples 11 and 12 was put into an injection molding machine TR450EH3 (manufactured by Sodick Co., Ltd.) having a molding temperature of 380°C, a multipurpose specimen (type A1) compliant with JIS K 7139 was produced by injecting into a mold with a mold temperature of 100°C at an injection speed of 20 mm/s, a screw rotation speed of 250 rpm, a holding pressure of 100 MPa, and a back pressure of 25 MPa, and an unnotched specimen, having a width of 10 mm, a length of 80 mm, and a thickness of 4 mm, was cut out from the molded article, thereby producing unnotched injectionspecimens (that is, molded articles) of Examples 25 and 26 (Table 6). The length-weighted average fiber lengths of the fibrous filler in the unnotched injection-molded specimen are shown in Table 6.

(Examples 27 and 28)

Each of the liquid crystal polyester resin pellets of Examples 13 and 14 was put into an injection molding machine TR450EH3 (manufactured by Sodick Co., Ltd.) having a molding temperature of 340°C, a multipurpose specimen (type A1) compliant with JIS K 7139 was produced by injecting into a mold with a mold temperature of 100°C at an injection speed of 20 mm/s, a screw rotation speed of 250 rpm, a holding pressure of 100 MPa, and a back pressure of 25 MPa, and an unnotched specimen having a width of 10 mm, a length of 80 mm, and a thickness of 4 mm, was cut out from the molded article, thereby producing unnotched injection-molded specimens without a notch (that is, molded articles) of Examples 27 and 28 (Table 6). The length-weighted average fiber lengths of the fibrous filler in the unnotched injection-molded specimen are shown in Table 6.

<Production of Liquid Crystal Polyester Resin Pellets>

(Examples 29 to 31)

Liquid crystal polyester resin pellets of Examples 29 to 31 having a cylindrical shape having a predetermined length were obtained in the same manner as in Example 1, except that the cutting of the strand-shaped resin structure 13 having a length of 4 mm in the longitudinal direction in Example 1 was changed to cutting of the length of each liquid crystal polyester resin pellets shown in Table 7 (Table 7). The length-weighted average fiber lengths of the fibrous filler (glass fiber) are as shown in Table 7.

(Examples 32 to 34)

Liquid crystal polyester resin pellets 15 of Examples 32 to 34 having a cylindrical shape having a predetermined length were obtained in the same manner as in Example 4, except that the cutting of the strand-shaped resin structure 13 having a length of 4 mm in the longitudinal direction in Example 4 was changed to cutting of the length of each liquid crystal polyester resin pellets shown in Table 7. The length-weighted average fiber lengths of the fibrous filler (carbon fiber) are as shown in Table 7.

<Production of Unnotched Injection-molded Specimen >

(Examples 35 to 40)

Each of the liquid crystal polyester resin pellets of Examples 29 to 34 was put into an injection molding machine TR450EH3 (manufactured by Sodick Co., Ltd.) having a molding temperature of 360°C, a multipurpose specimen (type A1) compliant with JIS K 7139 was produced by injecting into a mold with a mold temperature of 100°C at an injection speed of 20 mm/s, a screw rotation speed of 250 rpm, a holding pressure of 100 MPa, and a back pressure of 25 MPa, and an unnotched specimen having a width of 10 mm, a length of 80 mm, and a thickness of 4 mm, was cut out from the molded article, thereby producing unnotched injection-molded specimens (that is, molded articles) of Examples 35 to 40 (Table 7). The length-weighted average fiber lengths of the fibrous filler in the unnotched injection-molded specimen are shown in Table 7.

(Comparative Examples 13 and 14)

Each of the liquid crystal polyester resin pellets of Comparative Examples 1 and 2 was put into an injection molding machine TR450EH3 (manufactured by Sodick Co., Ltd.) having a molding temperature of 360°C, a multipurpose specimen (type A1) compliant with JIS K 7139 was produced by injecting into a mold with a mold temperature of 100°C at an injection speed of 20 mm/s, a screw rotation speed of 250 rpm, a holding pressure of 100 MPa, and a back pressure of 25 MPa, and an unnotched specimen, having a width of 10 mm, a length of 80 mm, and a thickness of 4 mm, was cut out from the molded article, thereby producing unnotched injection-molded specimens (that is, molded articles) of Comparative Examples 13 and 14 (Table 8). The length-weighted average fiber lengths of the fibrous filler in the unnotched injection-molded specimen are shown in Table 8.

(Comparative Examples 15 and 16)

Each of the resin pellets of Comparative Examples 8 and 9 was put into an injection molding machine TR450EH3 (manufactured by Sodick Co., Ltd.) having a molding temperature of 230°C, a multipurpose specimen (type A1) compliant with JIS K 7139 was produced by injecting into a mold with a mold temperature of 100°C at an injection speed of 20 mm/s, a screw rotation speed of 250 rpm, a holding pressure of 100 MPa, and a back pressure of 25 MPa, and an unnotched specimen, having a width of 10 mm, a length of 80 mm, and a thickness of 4 mm, was cut out from the molded article, thereby producing unnotched injection specimens of Comparative Examples 15 and 16 (Table 8). The length-weighted average fiber lengths of the fibrous filler in the unnotched injection-molded specimen are shown in Table 8.

(Comparative Examples 17 and 18)

Each of the resin pellets of Comparative Examples 10 and 11 was put into an injection molding machine TR450EH3 (manufactured by Sodick Co., Ltd.) having a molding temperature of 310°C, a multipurpose specimen (type A1) compliant with JIS K 7139 was produced by injecting into a mold with a mold temperature of 100°C at an injection speed of 20 mm/s, a screw rotation speed of 250 rpm, a holding pressure of 100 MPa, and a back pressure of 25 MPa, and a unnotched specimen having a width of 10 mm, a length of 80 mm, and a thickness of 4 mm, was cut out from the molded article, thereby producing injection-molded unnotched specimens of Comparative Examples 17 and 18 (Table 8). The length-weighted average fiber lengths of the fibrous filler in the unnotched injection-molded specimen are shown in Table 8.

(Comparative Example 19)

The resin pellets of Comparative Example 12 were put into an injection molding machine TR450EH3 (manufactured by Sodick Co., Ltd.) having a molding temperature of 320°C, a multipurpose specimen (type A1) compliant with JIS K 7139 was produced by injecting into a mold with a mold temperature of 100°C at an injection speed of 20 mm/s, a screw rotation speed of 250 rpm, a holding pressure of 100 MPa, and a back pressure of 25 MPa, and an unnotched injection-molded specimen , having a width of 10 mm, a length of 80 mm, and a thickness of 4 mm, was cut out from the molded article, thereby producing an unnotched injection-molded specimen of Comparative Example 19 (Table 8). The length-weighted average fiber lengths of the fibrous filler in the unnotched injection-molded specimen are shown in Table 8.

[Charpy Impact Strength of Unnotched injection-molded Specimen]

Using the unnotched injection-molded specimens of Examples 15 to 28 and 35 to 40, and Comparative Examples 13 to 19, having a width of 10 mm, a length of 80 mm, and a thickness of 4 mm, a Charpy impact test was performed using hammers 2.0J and 4.0J in accordance with ISO179-1 and JIS K 7111-1. For a Charpy impact strength of the unnotched injection-molded specimen, an average value of 5 measurements was adopted. In addition, each notch sensitivity was calculated. These results are shown in Tables 5 to 8.

[Charpy Impact Strength of Notched injection-molded Specimen ]

Regarding the notched injection-molded specimens of Examples 15 to 28 and 35 to 40, and Comparative Examples 13 to 19, having a width of 10 mm, a length of 80 mm, and a thickness of 4 mm, each notch processing was performed with a notch angle of 45° and a depth of 2 mm in accordance with ISO 2818 and JIS K 7144. A notching tool (model A-4, manufactured by Toyo Seiki Co., Ltd.) was used for the notch processing. Using the notched injection-molded specimen, a Charpy impact test was performed using hammers 2.0J and 4.0J in accordance with ISO179-1 and JIS K 7111-1. For a Charpy impact strength of the notched injection-molded specimen, an average value of 5 measurements was adopted. In addition, each notch sensitivity was calculated. These results are shown in Tables 5 to 8.

[Table 5]

| | | | Example 1 | Example 2 | Example 3 | Example 4 | Example 5 | Example 6 | Example 7 |
|---|---|---|---|---|---|---|---|---|---|
| Resin pellets | Liquid crystal polyester 1 | Part by mass | 100 | 100 | 100 | 100 | 100 | 100 | 100 |
| | Liquid crystal polyester 2 | Part by mass | | | | | | | |
| | Liquid crystal polyester 3 | Part by mass | | | | | | | |
| | Fibrous filler (glass fiber) | Part by mass | 67 | 67 | 67 | | | | 25 |
| | Fibrous filler (carbon fiber) | Part by mass | | | | 67 | 67 | 67 | |
| | Length of liquid crystal polyester resin pellets | mm | 4 | 12 | 42 | 4 | 12 | 42 | 12 |
| | Length-weighted average fiber length of fibrous filler | mm | 4 | 12 | 42 | 4 | 12 | 42 | 12 |
| | | | Example 15 | Example 16 | Example 17 | Example 18 | Example 19 | Example 20 | Example 21 |
| Molded article | Length-weighted average fiber length of fibrous filler | mm | 0.52 | 0.81 | 0.59 | 0.37 | 0.71 | 0.30 | 1.24 |
| | Charpy impact strength (unnotched) | kJ/m$^2$ | 18 | 22 | 18 | 23 | 24 | 24 | 22 |
| | Charpy impact strength (notched) | kJ/m$^2$ | 9 | 18 | 7 | 7 | 22 | 8 | 17 |
| | Notch sensitivity | - | 0.51 | 0.18 | 0.60 | 0.70 | 0.08 | 0.69 | 0.23 |

[Table 6]

| | | | Example 8 | Example 9 | Example 10 | Example 11 | Example 12 | Example 13 | Example 14 |
|---|---|---|---|---|---|---|---|---|---|
| Resin pellets | Liquid crystal polyester 1 | Part by mass | 100 | 100 | 100 | | | | |
| | Liquid crystal polyester 2 | Part by mass | | | | 100 | 100 | | |
| | Liquid crystal polyester 3 | Part by mass | | | | | | 100 | 100 |
| | Fibrous filler (glass fiber) | Part by mass | 100 | | | 67 | | 67 | |
| | Fibrous filler (carbon fiber) | Part by mass | | 25 | 100 | | 67 | | 67 |
| | Length of liquid crystal polyester resin pellets | mm | 12 | 12 | 12 | 12 | 12 | 12 | 12 |
| | Length-weighted average fiber length of fibrous filler | mm | 12 | 12 | 12 | 12 | 12 | 12 | 12 |
| | | | Example 22 | Example 23 | Example 24 | Example 25 | Example 26 | Example 27 | Example 28 |
| Molded article | Length-weighted average fiber length of fibrous filler | mm | 0.98 | 1.01 | 0.61 | 0.87 | 0.73 | 0.75 | 0.55 |
| | Charpy impact strength (unnotched) | $kJ/m^2$ | 33 | 25 | 12 | 9 | 13 | 18 | 13 |
| | Charpy impact strength (notched) | $kJ/m^2$ | 25 | 20 | 9 | 7 | 10 | 14 | 11 |
| | Notch sensitivity | - | 0.24 | 0.20 | 0.25 | 0.22 | 0.23 | 0.22 | 0.15 |

[Table 7]

| | | | Example 29 | Example 30 | Example 31 | Example 32 | Example 33 | Example 34 |
|---|---|---|---|---|---|---|---|---|
| Resin pellets | Liquid crystal polyester 1 | Part by mass | 100 | 100 | 100 | 100 | 100 | 100 |
| | Liquid crystal polyester 2 | Part by mass | | | | | | |
| | Liquid crystal polyester 3 | Part by mass | | | | | | |
| | Fibrous filler (glass fiber) | Part by mass | 67 | 67 | 67 | | | |
| | Fibrous filler (carbon fiber) | Part by mass | | | | 67 | 67 | 67 |
| | Length of resin pellets | mm | 7 | 9 | 15 | 7 | 9 | 15 |
| | Length-weighted average fiber length of fibrous filler | mm | 7 | 9 | 15 | 7 | 9 | 15 |
| | | | Example 35 | Example 36 | Example 37 | Example 38 | Example 39 | Example 40 |
| Molded article | Length-weighted average fiber length of fibrous filler | mm | 0.74 | 0.96 | 1.31 | 0.70 | 0.77 | 0.81 |
| | Charpy impact strength (unnotched) | kJ/m$^2$ | 23 | 21 | 22 | 19 | 18 | 17 |
| | Charpy impact strength (notched) | kJ/m$^2$ | 21 | 19 | 19 | 17 | 17 | 14 |
| | Notch sensitivity | - | 0.09 | 0.10 | 0.14 | 0.11 | 0.06 | 0.18 |

[Table 8]

| | | | Comparative Example 1 | Comparative Example 2 | Comparative Example 8 | Comparative Example 9 | Comparative Example 10 | Comparative Example 11 | Comparative Example 12 |
|---|---|---|---|---|---|---|---|---|---|
| Resin pellets | Liquid crystal polyester 1 | Part by mass | 100 | 100 | | | | | |
| | Polypropylene | Part by mass | | | 100 | 100 | | | |
| | Polyamide 66 | Part by mass | | | | | 100 | 100 | |
| | Polyphenylene sulfide | Part by mass | | | | | | | 100 |
| | Fibrous filler (glass fiber) | Part by mass | 67 | | 67 | | 100 | | |
| | Fibrous filler (carbon fiber) | Part by mass | | 67 | | 67 | | 67 | 67 |
| | Length of resin pellets | mm | 4.0 | 4.0 | 10 | 8 | 9 | 9 | 9 |
| | Length-weighted average fiber length of fibrous filler | mm | 0.25 | 0.22 | 10 | 8 | 9 | 9 | 9 |
| | | | Comparative Example 13 | Comparative Example 14 | Comparative Example 15 | Comparative Example 16 | Comparative Example 17 | Comparative Example 18 | Comparative Example 19 |
| Molded article | Length- weighted average fiber length of fibrous filler | mm | 0.20 | 0.18 | 0.39 | 0.34 | 0.42 | 0.34 | 0.28 |
| | Charpy impact strength (unnotched) | kJ/m$^2$ | 20 | 25 | 61 | 28 | 98 | 73 | 34 |
| | Charpy impact strength (notched) | kJ/m$^2$ | 8 | 5 | 13 | 7 | 21 | 11 | 7 |
| | Notch sensitivity | - | 0.60 | 0.80 | 0.79 | 0.75 | 0.79 | 0.85 | 0.79 |

EP 4 011 975 A1

35

As can be understood from the results shown in Tables 5 to 8, compared to the injection-molded specimens of Comparative Examples 13 to 19 produced by using the resin pellets of Comparative Examples 1, 2, and 8 to 12, it was confirmed that the injection-molded specimens (that is, molded articles) of Examples 16, 19, 21 to 28, and 35 to 40, which were produced under stricter molding conditions using, among the liquid crystal polyester resin pellets of Examples 1 to 14, the liquid crystal polyester resin pellets of Examples 2, 5, 7 to 14, and 29 to 34 in which the length-weighted average fiber length of the fibrous filler in the liquid crystal polyester resin pellets was equal to or greater than 4.5 mm and equal to or smaller than 40 mm, had a small notch sensitivity.

Compared to the injection-molded specimen of Comparative Example 13 produced by using the resin pellets of Comparative Example 1, it was confirmed that the injection-molded specimen (that is, the molded article) of Example 15 produced under stricter molding conditions using the liquid crystal polyester resin pellets of Example 1 also had a small notch sensitivity.

Compared to the injection-molded specimen of Comparative Example 13 produced by using the resin pellets of Comparative Example 1, it was confirmed that the notch sensitivity was the same for the injection-molded specimen (that is, the molded article) of Example 17 produced under stricter molding conditions using the liquid crystal polyester resin pellets of Example 3.

Compared to the injection-molded specimen of Comparative Example 14 produced by using the resin pellets of Comparative Example 2, it was confirmed that the injection-molded specimens (that is, the molded article) of Examples 18 and 20 produced under stricter molding conditions using the liquid crystal polyester resin pellets of Examples 4 and 6 also had a small notch sensitivity.

[Comparative Example 20]

<Production of Liquid Crystal Polyester Resin Pellets>

• Step of Obtaining Resin Structure

By operating the belt haul-off machine (haul-off part 127) at a haul-off speed of 10 m/min, carbon fibers (manufactured by Mitsubishi Chemical Co., Ltd., PYROFIL (registered trademark) CF tow, TR50S15L, PAN-based carbon fiber, tensile strength: 4,900 MPa, tensile elongation: 2.1%, number-average fiber diameter: 7 $\mu$m) were continuously fed from a fiber roving 10 as a fiber bundle 11 at a haul-off speed of 10 m/min, and first heated to 200°C and dried in a preheating part 121.

Separately, using the above-described extruder, the liquid crystal polyester 1 (70 parts by mass) obtained in the above <Production of Liquid Crystal Polyester 1> and polyamide 6 (UBE INDUSTRIES, LTD., UBE Nylon (registered trademark), 1013B) (30 parts by mass) were heated to 330°C to prepare a molten state (resin material M).

Next, while supplying the dried fibers 11 to a die (impregnation part 123) fit on a tip of the extruder, the molten resin material M was put in by the extruder from a supply port 123a. In the die (impregnation part 123), the liquid crystal polyester 1 was melted at 330°C, and the carbon fiber were impregnated with the liquid crystal polyester 1. The impregnation amount of the resin material M was adjusted by changing the size of the hole diameter at the outlet of the die (impregnation part 123). By impregnating 100 parts by mass of the resin material M with 67 parts by mass of the carbon fiber, a resin structure 13 in which the carbon fibers were arranged substantially in parallel to a longitudinal direction of the liquid crystal polyester resin layer was obtained.

Thereafter, the heated resin structure 13 in the die (impregnation part 123) was cooled to 150°C or lower by a cooling part 125.

• Step of Obtaining Pellets

Next, the cooled strand-shaped resin structure 13 was continuously hauled on by the belt haul-off machine (haul-off part 127) at a haul-off speed of 10 m/min, fed to a pelletizer (cut part 129), cut to a length of 12 mm in the longitudinal direction thereof to obtain liquid crystal polyester resin pellets 15 of Comparative Example 20, having a cylindrical shape (length: 12 mm). The length-weighted average fiber length of the fibrous filler (carbon fiber) included in the pellets was 12 mm.

<Production of unnotched Specimen >

The liquid crystal polyester resin pellets 15 of Comparative Example 20 were put into an injection molding machine TR450EH3 (manufactured by Sodick Co., Ltd.) having a molding temperature of 330°C, a multipurpose specimen (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa, and an unnotched specimen, having a width of 10 mm, a length of 80 mm, and a thickness of 4 mm, was cut out from the specimen. In addition, the Charpy impact test was performed in the same manner as in Example 1. The results of the length-weighted average fiber length of the fibrous filler in the unnotched specimen and the Charpy impact strength are shown in Table 9.

[Comparative Example 21]

Liquid crystal polyester resin pellets 15 of Comparative Example 21 having a cylindrical shape (length: 12 mm) were obtained in the same manner as in Comparative Example 20, except that the carbon fiber (67 parts by mass) in Comparative Example 20 was changed to glass fiber (manufactured by Nitto Boseki Co., Ltd., RS110QL483AC, E-glass, number-average fiber diameter: 17 $\mu$m) (67 parts by mass). The length-weighted average fiber length of the fibrous filler included in the pellets was 12 mm.

<Production of unnotched Specimen >

The liquid crystal polyester resin pellets 15 of Comparative Example 21 were put into an injection molding machine TR450EH3 (manufactured by Sodick Co., Ltd.) having a molding temperature of 330°C, a multipurpose specimen (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa, and an unnotched specimen having a width of 10 mm, a length of 80 mm, and a thickness of 4 mm, was cut out from the specimen. In addition, the Charpy impact test was performed in the same manner as in Example 1. The results of the length-weighted average fiber length of the fibrous filler in the unnotched specimen and the Charpy impact strength are shown in Table 9.

[Charpy Impact Strength of notched Specimen]

Regarding the unnotched specimens of Comparative Examples 20 and 21, having a width of 10 mm, a length of 80 mm, and a thickness of 4 mm, each notch processing was performed with a notch angle of 45° and a depth of 2 mm in accordance with ISO 2818 and JIS K 7144. In the notch processing, a notching tool (manufactured by TOYO SEIKI CO.,LTD., Model A-4) was used, and using these notched specimens, a Charpy impact test was performed using hammers 2.0J and 4.0J in accordance with ISO179-1 and JIS K 7111-1. For a Charpy impact strength of the notched specimen, an average value of 5 measurements was adopted. The results of the Charpy impact strength and the notch sensitivity are shown in Table 9.

[Table 9]

| | | | Comparative Example 20 | Comparative Example 21 |
|---|---|---|---|---|
| Liquid crystal polyester resin pellets | Liquid crystal polyester 1 | Part by mass | 70 | 70 |
| | Polyamide 6 (nylon 6) | Part by mass | 30 | 30 |
| | Fibrous filler (carbon fiber) | Part by mass | 67 | |
| | Fibrous filler (glass fiber) | Part by mass | | 67 |
| | Length of resin pellets | mm | 12 | 12 |
| | Length-weighted average fiber length of fibrous filler | mm | 12 | 12 |

(continued)

| Injection-molded specimen | | | Comparative Example 20 | Comparative Example 21 |
|---|---|---|---|---|
| | Length-weighted average fiber length of fibrous filler | mm | 3.34 | 3.95 |
| | Proportion of fibrous filler having fiber length of equal to or greater than 1 mm | % | - | - |
| | Charpy impact strength (unnotched) | kJ/m$^2$ | 36 | 19 |
| | Charpy impact strength (notched) | kJ/m$^2$ | 18 | 10 |
| | Notch sensitivity | - | 0.50 | 0.47 |

Comparing the evaluation results of Comparative Example 20 in Table 9 with the results of Example 5 in Table 1, in Example 5 of Table 1, 100 parts by mass of the liquid crystal polyester 1 was used, whereas Comparative Example 20 in Table 9 was different only in that the liquid crystal polyester 1 was used in an amount of 70 parts by mass and the polyamide 6 (nylon 6) was used in an amount of 30 parts by mass. The molding temperature of the unnotched specimen was selected to be the optimum temperature according to the composition of each resin pellets.

The Charpy impact strength of the injection-molded specimen using the resin pellets of Example 5 in Table 1 was 19 (unnotched) and 22 (notched), and the notch sensitivity was as small as -0.16, which was excellent. On the other hand, the Charpy impact strength of the injection-molded specimen using the resin pellets of Comparative Example 20 in Table 9 was 36 (unnotched) and 18 (notched), and the notch sensitivity was as great as 0.50, which was inferior.

In addition, comparing the evaluation results of Comparative Example 21 in Table 9 with the results of Example 2 in Table 1, in Example 2 of Table 1, 100 parts by mass of the liquid crystal polyester 1 was used, whereas Comparative Example 21 in Table 9 was different only in that the liquid crystal polyester 1 was used in an amount of 70 parts by mass and the polyamide 6 (nylon 6) was used in an amount of 30 parts by mass. The molding temperature of the unnotched specimen was selected to be the optimum temperature according to the composition of each resin pellets.

The Charpy impact strength of the injection-molded specimen using the resin pellets of Example 2 in Table 1 was 67 (unnotched) and 50 (notched), and the notch sensitivity was as small as 0.25, which was excellent. On the other hand, the Charpy impact strength of the injection-molded specimen using the resin pellets of Comparative Example 21 in Table 9 was 19 (unnotched) and 10 (notched), and the notch sensitivity was as great as 0.47, which was inferior.

That is, in the liquid crystal polyester resin pellets in which the proportion of the liquid crystal polyester with respect to 100 mass% of the thermoplastic resin was equal to or greater than 80 mass% and equal to or smaller than 100 mass%, a molded article having a smaller notch sensitivity in the Charpy impact test could be formed than the liquid crystal polyester resin pellets in which the proportion of the liquid crystal polyester with respect to 100 mass% of the thermoplastic resin was 70 mass%.

By adjusting the length-weighted average fiber length of the fibrous filler in the liquid crystal polyester resin pellets, the notch sensitivity can be smaller, and the degree of freedom in designing the molded article molded using the liquid crystal polyester resin pellets can be ensured.

[Reference Signs List]

10: fiber roving
11: fiber bundle
13: resin structure
15: pellets
100: production equipment
120: extruder
121: preheating part
123: impregnation part
123a: supply port
125: cooling part
127: haul-off part
129: cut part

101 to 109: feeding roll
M: resin material

**Claims**

1.  Liquid crystal polyester resin pellets comprising:

    a thermoplastic resin comprising a liquid crystal polyester; and
    a fibrous filler,
    wherein the pellets contain the fibrous filler in the amount of equal to or greater than 1 part by mass and smaller than 120 parts by mass with respect to 100 parts by mass of the thermoplastic resin, and
    a length-weighted average fiber length of the fibrous filler is equal to or greater than 4 mm and smaller than 50 mm.

2.  The liquid crystal polyester resin pellets according to Claim 1,

    wherein the fibrous fillers are arranged in one direction, and
    a fiber length of the fibrous filler is substantially the same as a length of the liquid crystal polyester resin pellets.

3.  The liquid crystal polyester resin pellets according to Claim 1 or 2,
    wherein a proportion of the liquid crystal polyester is equal to or greater than 80 mass% and equal to or smaller than 100 mass% with respect to 100 mass% of the thermoplastic resin.

4.  The liquid crystal polyester resin pellets according to any one of Claims 1 to 3,

    wherein the liquid crystal polyester comprises a repeating unit represented by Formula (1), (2), or (3),
    an amount of the repeating unit represented by Formula (1) is equal to or greater than 30 mol% and equal to or smaller than 100 mol% with respect to a total amount of the repeating units represented by Formulae (1), (2), and (3),
    an amount of the repeating unit represented by Formula (2) is equal to or greater than 0 mol% and equal to or smaller than 35 mol% with respect to the total amount of the repeating units represented by Formulae (1), (2), and (3), and
    an amount of the repeating unit represented by Formula (3) is equal to or greater than 0 mol% and equal to or smaller than 35 mol% with respect to the total amount of the repeating units represented by Formulae (1), (2), and (3),

    (1)          $-O-Ar^1-CO-$

    (2)          $-CO-Ar^2-CO-$

    (3)          $-X-Ar^3-Y-$

    (in Formulae (1) to (3), $Ar^1$ represents a phenylene group, a naphthylene group, or a biphenylylene group, $Ar^2$ and $Ar^3$ each independently represent a phenylene group, a naphthylene group, a biphenylene group, or a group represented by Formula (4), X and Y each independently represent an oxygen atom or an imino group, and hydrogen atoms in the group represented by $Ar^1$, $Ar^2$, or $Ar^3$ may be each independently substituted with a halogen atom, an alkyl group, or an aryl group)

    (4)          $-Ar^4-Z-Ar^5-$

    (in Formula (4), $Ar^4$ and $Ar^5$ each independently represent a phenylene group or a naphthylene group, and Z represents an oxygen atom, a sulfur atom, a carbonyl group, a sulfonyl group, or an alkylidene group).

5.  The liquid crystal polyester resin pellets according to any one of Claims 1 to 4,
    wherein the fibrous filler is at least one selected from the group consisting of a carbon fiber and a glass fiber.

6.  The liquid crystal polyester resin pellets according to any one of Claims 1 to 5,
    wherein a notched Charpy impact strength Ea of a specimen having a 45° V-shaped groove with a depth of 2 mm in a center of a length of 80 mm, a width of 10 mm, and a thickness of 4 mm, which is produced using the liquid crystal polyester resin pellets, and an unnotched Charpy impact strength Eb of a specimen with a length of 80 mm, a width of 10 mm, and a thickness of 4 mm, which is produced using the liquid crystal polyester resin pellets satisfy Expression (5),

$$1 - (Ea / Eb) \leq 0.4 \quad \cdots (5).$$

7.  A production method for the liquid crystal polyester resin pellets according to any one of Claims 1 to 6, comprising:

    a step of impregnating a fiber bundle, which is a raw material of the fibrous filler, with the thermoplastic resin in a molten state to obtain a strand-shaped resin structure, and
    a step of cutting the strand-shaped resin structure.

8.  A production method for a molded article, comprising:
    a step of molding a molded article using the liquid crystal polyester resin pellets according to any one of Claims 1 to 6.

FIG. 1

EP 4 011 975 A1

## INTERNATIONAL SEARCH REPORT

| International application No. |
| --- |
| PCT/JP2020/029795 |

### A. CLASSIFICATION OF SUBJECT MATTER

C08L 67/00(2006.01)i; B29B 9/06(2006.01)i; C08G 63/60(2006.01)i; C08J 3/12(2006.01)i; C08K 7/02(2006.01)i
FI: C08L67/00; C08K7/02; C08G63/60; B29B9/06; C08J3/12 Z CFD

According to International Patent Classification (IPC) or to both national classification and IPC

### B. FIELDS SEARCHED

Minimum documentation searched (classification system followed by classification symbols)

C08K3/00-13/08; C08L1/00-101/14; C08G63/00-64/42; B29B7/00-15/14; B29C31/00-31/10; B29C37/00-37/04; B29C71/00-71/02; C08J3/00-3/28; C08J5/04-5/10

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
| --- | --- | --- |
| X | JP 2009-074043 A (ASAHI KASEI CHEMICALS CORP.) 09 April 2009 (2009-04-09) claims, paragraphs [0012]-[0015], [0019], [0037], [0051]-[0064], [0206]-[0207], [0215], [0228]-[0234], [0247], [0263], examples | 1-8 |
| X A | JP 2012-092303 A (TORAY INDUSTRIES, INC.) 17 May 2012 (2012-05-17) claims, paragraphs [0038]-[0066], [0098]-[0099], [0105], [0121]-[0122], [0129]-[0151], examples | 1-2, 4-8 3 |
| A | WO 2015/053181 A1 (TORAY INDUSTRIES, INC.) 16 April 2015 (2015-04-16) entire text | 1-8 |
| A | JP 2017-066412 A (SUMITOMO CHEMICAL CO., LTD.) 06 April 2017 (2017-04-06) entire text | 1-8 |

☒ Further documents are listed in the continuation of Box C.  ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 05 October 2020 (05.10.2020) | 20 October 2020 (20.10.2020) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2020/029795 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2012-193270 A (SUMITOMO CHEMICAL CO., LTD.) 11 October 2012 (2012-10-11) entire text | 1-8 |
| A | JP 2008-239950 A (SUMITOMO CHEMICAL CO., LTD.) 09 October 2008 (2008-10-09) entire text | 1-8 |
| A | WO 2009/116608 A1 (PRIME POLYMER CO., LTD.) 24 September 2009 (2009-09-24) entire text | 1-8 |
| A | JP 2008-007598 A (MITSUBISHI ENGINEERING-PLASTICS CORPORATION) 17 January 2008 (2008-01-17) entire text | 1-8 |

**INTERNATIONAL SEARCH REPORT**
Information on patent family members

International application No.

PCT/JP2020/029795

| Patent Documents referred in the Report | Publication Date | Patent Family | Publication Date |
|---|---|---|---|
| JP 2009-074043 A | 09 Apr. 2009 | WO 2008/123449 A1 | |
| JP 2012-092303 A | 17 May 2012 | (Family: none) | |
| WO 2015/053181 A1 | 16 Apr. 2015 | CN 105492537 A<br>KR 10-2016-0070062 A<br>TW 201522502 A | |
| JP 2017-066412 A | 06 Apr. 2017 | US 2012/0217678 A1<br>entire text<br>CN 102649869 A<br>KR 10-2012-0098422 A<br>TW 201241082 A | |
| JP 2012-193270 A | 11 Oct. 2012 | US 2012/0235092 A1<br>entire text<br>CN 102675832 A<br>TW 201302992 A | |
| JP 2008-239950 A | 09 Oct. 2008 | US 2008/0203358 A1<br>entire text<br>KR 10-2008-0079192 A<br>CN 101519498 A<br>TW 200840450 A | |
| WO 2009/116608 A1 | 24 Sep. 2009 | US 2011/0040022 A1<br>entire text<br>EP 2256150 A1<br>CN 102159627 A | |
| JP 2008-007598 A | 17 Jan. 2008 | (Family: none) | |

Form PCT/ISA/210 (patent family annex) (January 2015)

44

**EP 4 011 975 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019148158 A

- JP 2012193270 A

**Non-patent literature cited in the description**

- Liquid Crystal Polymer, -Synthesis·Molding·Application. CMC Co, 05 June 1987, 95